# EUROPEAN PATENT APPLICATION

(11) **EP 4 379 393 A2**
(43) Date of publication of application: **05.06.2024**
(21) Application number: 23213565.7
(22) Date of filing: 30.11.2023
(51) Int. Cl.: G01N 35/04, G01N 35/00

(54) **SAMPLE MANAGEMENT APPARATUS, AND SAMPLE PROCESSING SYSTEM**

(30) Priority: 01.12.2022 CN 202211531735
(71) Applicant: Shenzhen Mindray Bio-Medical Electronics Co., Ltd., Shenzhen, Guangdong 518057 (CN)
(72) Inventor: HU, Lijian, Shenzhen, 518057 (CN); LI, Xuerong, Shenzhen, 518057 (CN)
(74) Representative: KIPA AB

(57) **Abstract**

The invention is applicable to the field of medical equipment and discloses a sample management apparatus and a sample processing system. The sample management apparatus includes a storage mechanism, a dispatch mechanism and a transfer mechanism. The storage mechanism is configured to at least store a sample container containing a sample. The dispatch mechanism is arranged below or above the storage mechanism in a height direction of the sample management apparatus and includes a loading support platform and a first drive component. The loading support platform is provided with a loading position for supporting a container rack with at least two container positions for receiving the sample containers transferred by the transfer mechanism. The first drive component is configured to drive the container rack at the loading position to move away from the loading position. The transfer mechanism is configured to at least transfer the sample container containing the sample from the storage mechanism into a container position of the container rack at the loading position. The invention achieves the automatic sample loading, thereby reducing manpower. The dispatch mechanism and storage mechanism are arranged in layers in the vertical direction, which can help to reduce an area occupied by the sample management apparatus.

## Description

### TECHNICAL FIELD

The invention relates to the technical field of medical equipment, and in particular to a sample management apparatus and a sample processing system with the sample management apparatus.

### BACKGROUND

In the related art, a sample analysis assembly line includes a sample analyzer and a transport track. The sample analyzer is mainly responsible for testing and analyzing a sample, and the transport track is mainly responsible for a transport of the sample. Sample loading and recycling manners in the sample analysis assembly line are as follows: an operator inserts a sample container into a sample rack, then puts the sample rack into a loading component of the sample analysis assembly line, and transports the sample rack to the sample analyzer by the transport track for testing and analysis. After the sample testing is completed, the transport track transports the sample rack to an unloading component of the sample analysis assembly line; the operator takes the sample container containing the tested sample out of the sample rack and puts it into a foam box, and then the operator puts the foam box containing the sample container into a sample storage mechanism, such as a refrigerator or freezer, for storage. The sample container is stored in the refrigerator or freezer for refrigeration by using the foam box because the number of sample containers that can be stored in the sample rack transported on the transport track is less than or equal to 12, which is inconvenient to be stored in the refrigerator or freezer, while the foam box can usually hold 50 ~ 100 samples.

The above sample analysis assembly line has the following shortcomings in a specific application: the sample analysis assembly line does not directly connect with the sample storage mechanism, and the operator needs to transfer the sample container back and forth between the sample analysis assembly line and the storage mechanism, so a burden of the operator when loading and recycling the sample is relatively high, and a manpower consumption is also relatively high. Moreover, the storage mechanism occupies a separate installation space, which leads to a large overall space occupation for the storage mechanism and the sample analysis assembly line.

### SUMMARY

A first object of the invention is to provide a sample management apparatus, which aims to solve the technical problem of high manpower consumption and large space occupation during the sample loading and recycling due to the separate arrangement of the storage mechanism in the related art.

In order to achieve the above object, the invention provides a sample management apparatus, which includes a storage mechanism, a dispatch mechanism and a transfer mechanism.

The storage mechanism is configured to at least store a sample container containing a sample.

The dispatch mechanism is arranged below or above the storage mechanism in a height direction of the sample management apparatus and including a loading support platform and a first drive component. The loading support platform is provided with a loading position for supporting a container rack with at least two container positions for receiving the sample containers transferred by the transfer mechanism. The first drive component is configured to drive the container rack at the loading position to move away from the loading position.

The transfer mechanism is configured to at least transfer a sample container containing a sample from the storage mechanism to a container position of the at least two container positions of the container rack at the loading position.

In an implementation, the dispatch mechanism is arranged below the storage mechanism in the height direction of the sample management apparatus. The transfer mechanism includes a first clamping jaw and a first drive assembly, the first clamping jaw is configured to clamp and release the sample container, and the first drive assembly is configured to at least drive the first clamping jaw to move the sample container from the storage mechanism to directly above the loading position, so as to enable the first clamping jaw to place the sample container into the container rack at the loading position.

In an implementation, the dispatch mechanism is arranged above the storage mechanism in the height direction of the sample management apparatus, and the sample management apparatus is provided with a transit position between the storage mechanism and the dispatch mechanism.

The transfer mechanism includes a second clamping jaw, a second drive assembly, a third clamping jaw and a third drive assembly. Both the second clamping jaw and the third clamping jaw are configured to clamp and release the sample container, the second drive assembly is configured to at least drive the second clamping jaw to move the sample container from the storage mechanism to the transit position, and the third drive assembly is configured to at least drive the third clamping jaw to move the sample container from the transit position to directly above the loading position, so as to enable the third clamping jaw to place the sample container into the container rack at the loading position.

In an implementation, the dispatch mechanism further includes a recycle support platform, a second drive component and a third drive component. The recycle support platform is provided with a recycle position arranged directly opposite to the loading position in a first horizontal direction.

The second drive component is configured to drive a container rack, loaded with a sample container containing a to-be-recycled sample, on the recycle support platform to move to the recycle position in a second horizontal direction.

The transfer mechanism is further configured to transfer the sample container from the container rack at the recycle position to the storage mechanism or to a sample container recycle component independent of the storage mechanism.

The third drive component is configured to drive an unloaded container rack at the recycle position to move to the loading position in the first horizontal direction.

The first horizontal direction is perpendicular to the second horizontal direction.

In an implementation, the dispatch mechanism further includes a buffer support platform, a fourth drive component and a fifth drive component. The recycle support platform is arranged between the loading support platform and the buffer support platform in the first horizontal direction, and the buffer support platform is provided with a transfer position.

The fourth drive component is configured to drive an unloaded container rack on the buffer support platform to move to the transfer position in the second horizontal direction.

The fifth drive component is configured to drive the unloaded container rack at the transfer position to move to the recycle support platform in the first horizontal direction.

The second drive component is further configured to drive the unloaded container rack, which is moved from the transfer position to the recycle support platform, to move to the recycle position in the second horizontal direction.

In an implementation, a size of the loading support platform is greater than a size of the buffer support platform in the second horizontal direction, and a size of the recycle support platform is greater than the size of the buffer support platform in the second horizontal direction; and/or, a size of the loading support platform is equal to a size of the recycle support platform in the second horizontal direction.

In an implementation, the sample management apparatus is provided with a clearance space located directly above the loading position and the recycle position. The clearance space allows the transfer mechanism to drive the sample container to descend from directly above the loading position, and allows the transfer mechanism to drive the sample container to ascend from the recycle position.

Alternatively, the sample management apparatus is provided with a loading opening located directly above the loading position and with a recycle opening located directly above the recycle position. The loading opening allows the transfer mechanism to drive the sample container to descend from directly above the loading position, the recycle opening allows the transfer mechanism to drive the sample container to ascend from the recycle position, and the loading opening and the recycle opening are arranged separately from each other.

In an implementation, the sample management apparatus further includes a transport track. The loading support platform, the recycle support platform and the buffer support platform are arranged on a same side of the transport track in the second horizontal direction.

The transport track is configured to: transport the container rack, loaded with the sample container containing a to-be-tested sample, on the loading support platform to a transport apparatus in the first horizontal direction, such that the transport apparatus transports the container rack to at least one sample processing apparatus; transport the unloaded container rack on the loading support platform to the buffer support platform; and transport the container rack loaded with the sample container containing a to-be-recycled sample to the recycle support platform.

In an implementation, the loading position is arranged at an end, away from the transport track, of the loading support platform in the second horizontal direction. The recycle position is arranged at an end, away from the transport track, of the recycle support platform in the second horizontal direction. The transfer position is arranged at an end, away from the transport track, of the buffer support platform in the second horizontal direction.

A distance from the loading position to the transport track in the second horizontal direction is greater than a distance from the transfer position to the transport track in the second horizontal direction.

A distance from the recycle position to the transport track in the second horizontal direction is greater than the distance from the transfer position to the transport track in the second horizontal direction.

In an implementation, the transport track is a single track capable of transporting the container rack forward and backward in the first horizontal direction.

In an implementation, the loading support platform includes at least two loading positions, and each of the at least two loading positions supports a respective container rack for receiving the sample containers transferred by the transfer mechanism.

In an implementation, the at least two loading positions are arranged side by side in the second horizontal direction.

In an implementation, the sample management apparatus further includes a first information acquisition component and a controller. The first information acquisition component is configured to identify the sample container after the transfer mechanism clamps the sample container from the storage mechanism and before the transfer mechanism transfers the sample container to the container rack at the loading position.

The controller is configured to: determine a classification attribute of a target sample container based on feedback information from the first information acquisition component; determine whether the container rack at the loading position is loaded with a sample container having a classification attribute that is same as the classification attribute of the target sample container, or determine whether the container rack at the loading position is assigned with a classification attribute that is same as the classification attribute of the target sample container; and control the transfer mechanism to place the target sample container into the container rack, that is loaded with the sample container having the same classification attribute as the target sample container, at the loading position, in response to determining that the container rack at the loading position is loaded with the sample container having the same classification attribute as the target sample container, or control the transfer mechanism to place the target sample container into the container rack, that is assigned with the same classification attribute as the target sample container, at the loading position, in response to determining that the container rack at the loading position is assigned with the same classification attribute as the target sample container.

In an implementation, the controller is further configured to: acquire at least an appearance characteristic of the target sample container based on feedback information from the first information acquisition component, and determine the classification attribute of the target sample container based on the appearance characteristic of the target sample container; and/or, the controller is further configured to: acquire at least a to-be-processed item of a sample in the target sample container based on feedback information from the first information acquisition component, and determine the classification attribute of the target sample container based on the to-be-processed item of the sample in the target sample container.

In an implementation, the first information acquisition component is arranged on the transfer mechanism, the storage mechanism, or the dispatch mechanism.

In an implementation, the sample management apparatus further includes a second information acquisition component and a controller. The second information acquisition component is arranged on the transfer mechanism for identifying the sample container on the storage mechanism.

The controller is configured to determine a storage state of the sample container on the storage mechanism based on feedback information from the second information acquisition component.

In an implementation, the storage mechanism includes a container supporter. The sample management apparatus further includes a housing, the container supporter is horizontally movable relative to the housing, and the container supporter is provided with at least one support position for placing a bracket capable of supporting multiple sample containers.

In an implementation, the sample management apparatus further includes two or more container supporters, at least one of the two or more container supporters is configured to support a bracket for a sample container containing a to-be-tested sample, and at least another of the two or more container supporters is configured to support a bracket for a sample container containing a to-be-recycled sample.

In an implementation, the sample management apparatus further includes two or more container supporters, and at least one of the two or more container supporters is configured to support a bracket for a sample container containing an abnormal sample.

A second object of the invention is to provide a sample processing system, which includes a transport apparatus, at least one sample processing apparatus and the sample management apparatus.

The transport apparatus is configured to transport a container rack loaded with a sample container from the sample management apparatus to the sample processing apparatus.

The sample processing apparatus is configured to aspirate a sample from the sample container in the container rack and process at least a portion of the aspirated sample.

The invention provides the sample management apparatus and the sample processing system. The storage mechanism is arranged in the sample management apparatus and configured to store the sample container containing the sample, so as to achieve the storage of the sample container. The sample management apparatus further includes the dispatch mechanism and the transfer mechanism, and the transfer mechanism transfers the sample container containing the sample from the storage mechanism into a container rack in the dispatch mechanism, thereby achieving the automatic loading of the sample, which is beneficial for reducing manpower. In addition, the dispatch mechanism is arranged below or above the storage mechanism in the height direction of the sample management apparatus, that is, the dispatch mechanism and the storage mechanism are arranged in layers in the vertical direction, which is beneficial for reducing the horizontal size of the sample management apparatus, thereby reducing an occupied area of the sample management apparatus while achieving the storage and the automatic loading functions of the sample management apparatus, and facilitating a miniaturization design of the sample management apparatus and the sample processing system.

### BRIEF DESCRIPTION OF THE DRAWINGS

In order to more clearly explain the technical solution in the embodiments of the invention or in the related art, the drawings used in the description of the embodiments or the related art will be briefly described below. It will be apparent that the drawings described below are only some embodiments of the invention, and other drawings can be obtained from these drawings without creative effort for those of ordinary skill in the art.
FIG. 1 is a schematic top view illustrating a sample processing system according to an embodiment of the invention.
FIG. 2 is a schematic diagram illustrating a power supply line connection of a sample processing system according to an embodiment of the invention.
FIG. 3 is a schematic diagram illustrating a distribution of a sample management apparatus and a human-computer interaction apparatus according to an embodiment of the invention.
FIG. 4 is a schematic diagram illustrating a structure of a sample management apparatus in which a storage mechanism is in an open state according to an embodiment of the invention.
FIG. 5 is a schematic diagram illustrating a distribution of a transfer mechanism, a storage mechanism and a dispatch mechanism according to an embodiment of the invention.
FIG. 6 is a schematic diagram illustrating a structure of a dispatch mechanism according to an embodiment of the invention.
FIG. 7 is a schematic diagram illustrating a process of transporting an unloaded container rack from a buffer support platform to a loading support platform for loading according to an embodiment of the invention, in which a solid arrow guide line illustrates a transport direction of the container rack.
FIG. 8 is a schematic diagram illustrating a process of transporting a container rack in a dispatch mechanism after the container rack is transported from a transport apparatus to the dispatch mechanism according to an embodiment of the invention, in which a solid arrow guide line illustrates a transport direction of the container rack.
FIG. 9 is a schematic diagram illustrating a process of transporting a container rack from a recycle support platform to a buffer support platform according to an embodiment of the invention, in which a solid arrow guide line illustrates a transport direction of the container rack.
FIG. 10 is a schematic diagram illustrating a structure of a transfer mechanism according to an embodiment of the invention.
FIG. 11 is a schematic diagram illustrating a distribution of a first information acquisition component and a second information acquisition component on a first transfer mechanism according to an embodiment of the invention.
FIG. 12 is a schematic diagram illustrating a state in which a transfer mechanism releases a sample container onto a guide channel according to an embodiment of the invention.
FIG. 13 is a schematic diagram illustrating a structure of a storage mechanism loaded with a sample container according to an embodiment of the invention.
FIG. 14 is a schematic diagram illustrating a structure of a storage mechanism before loading a sample container according to an embodiment of the invention.
FIG. 15 is a schematic diagram illustrating a structure of a bracket loaded with a sample container according to an embodiment of the invention.
FIG. 16 is a schematic diagram illustrating a bottom surface structure of a bracket according to an embodiment of the invention.
FIG. 17 is a schematic diagram illustrating a structure of a container rack loaded with a sample container according to an embodiment of the invention.
FIG. 18 is a schematic diagram illustrating a structure of a container rack according to an embodiment of the invention.
FIG. 19 is a schematic diagram illustrating a structure of a sample container according to an embodiment of the invention.
FIG. 20 is a schematic diagram illustrating a structure comparison between a first type of sample container and a second type of sample container according to an embodiment of the invention.
FIG. 21 is a schematic diagram illustrating a structure of a cleaning liquid container according to an embodiment of the invention.

Description of the reference numbers: 10, sample processing system; 100, sample processing apparatus; 200, sub-control unit; 300, transport apparatus; 400, controller; 500, human-computer interaction apparatus; 600, sample management apparatus; 610, storage mechanism; 611, container supporter; 6111, support position; 6112, handle; 6113, first support; 6114, second support; 612, bracket; 6121, accommodating hole; 6122, hole number; 6123, fourth label; 613, first power assembly; 614, first button; 615, fourth information acquisition component; 620, indicating component; 630, dispatch mechanism; 631, loading assembly; 6311, loading support platform; 6301, first loading position; 6302, second loading position; 6303, first slipper guide; 6312, first drive component; 632, transport track; 6321, first workstation; 6322, second workstation; 6323, third workstation; 633, recycle assembly; 6331, recycle support platform; 6304, recycle position; 6332, second drive component; 6333, third drive component; 634, buffer assembly; 6341, buffer support platform; 6305, transfer position; 6342, fourth drive component; 6343, fifth drive component; 635, sixth drive component; 6351, first blocking member; 6352, first pushing member; 636, seventh drive component; 6361, second blocking member; 6362, second pushing member; 637, third information acquisition component; 640, transfer mechanism; 641, first clamping jaw; 642, first drive assembly; 6421, first slide guide component; 6422, second slide guide component; 6423, sliding component; 6424, lifting component; 6425, rotating component; 650, first information acquisition component; 660, housing; 670, second information acquisition component; 680, receiving mechanism; 601, first accommodating space; 602, second accommodating space; 603, guide channel; 700, power supply component; 20, cleaning liquid container; 21, first container body; 30, sample container; 31, second container body; 32, second cap; 33, second label; 301, first type of sample container; 3011, first intra-cavity bottom wall; 3012, first container bottom; 302, second type of sample container; 3021, second intra-cavity bottom wall; 3022, second container bottom; 40, container rack; 41, concave hole; 42, slot; 43, first label; 44, concave cavity; X, first horizontal direction; Y, second horizontal direction; Z, vertical direction.

### DETAILED DESCRIPTION

The technical solutions in the embodiments of the invention will be clearly and completely described below with reference to the drawings in the embodiments of the invention. It is apparent that the described embodiments are not all embodiments but part of embodiments of the invention. All other embodiments obtained by those of ordinary skill in the art based on the embodiments in the invention without creative work shall fall within the scope of protection of the invention.

It should be noted that all directional indications (such as up, down, left, right, front, back, etc.) in the embodiments of the invention are only used to explain a relative positional relationship and motion situation among the components under a specific posture. If the specific posture is changed, the directional indications are changed accordingly.

It should also be noted that when an element is referred to be "fixed" or "arranged" on another element, it may be directly fixed or arranged on the other element or there may be an intermediate element between them. When an element is referred to be "connected" to another element, it can be directly connected to another element or indirectly connected to another element through an intermediate element.

In addition, the descriptions involving "first" and "second", etc. in the invention are used for descriptive purposes only and are not to be construed as indicating or implying a relative importance or implicitly indicating the number of technical features indicated. Thus, the features defined by "first", "second", etc. may explicitly or implicitly include at least one of the features. In addition, the technical solutions in the various embodiments may be combined with each other on the basis that the person of ordinary skill in the art can implement it. When the technical solutions conflicts with each other or the combination cannot be implemented, it should be considered that the combination of the technical solutions does not exist and is not within the scope of protection of the invention.

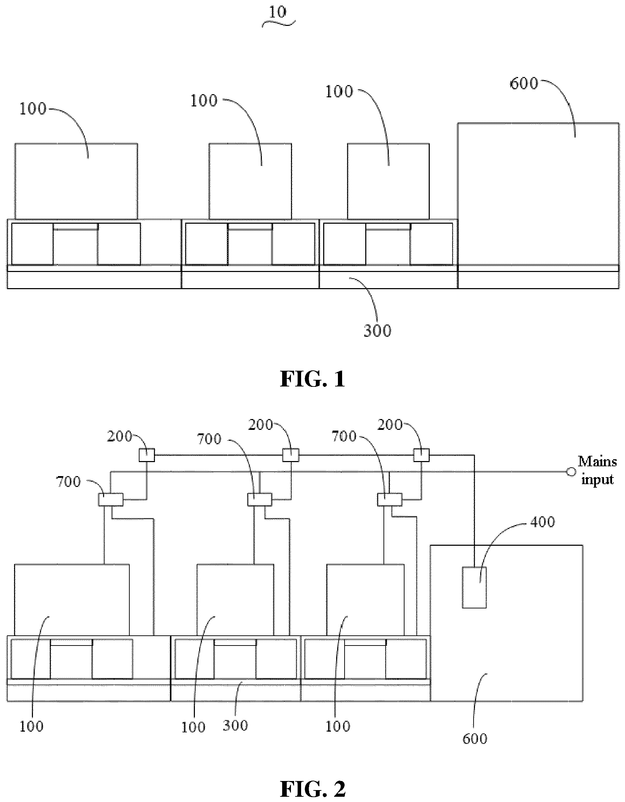

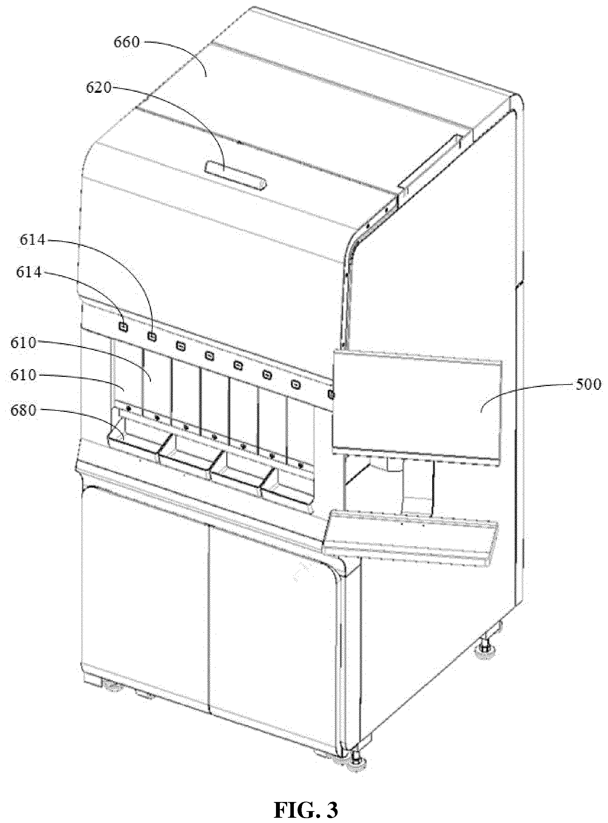

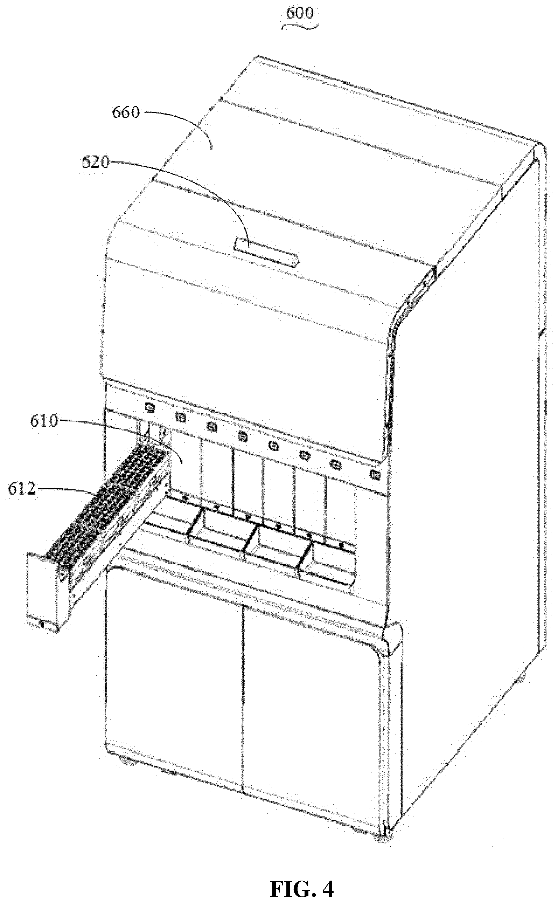

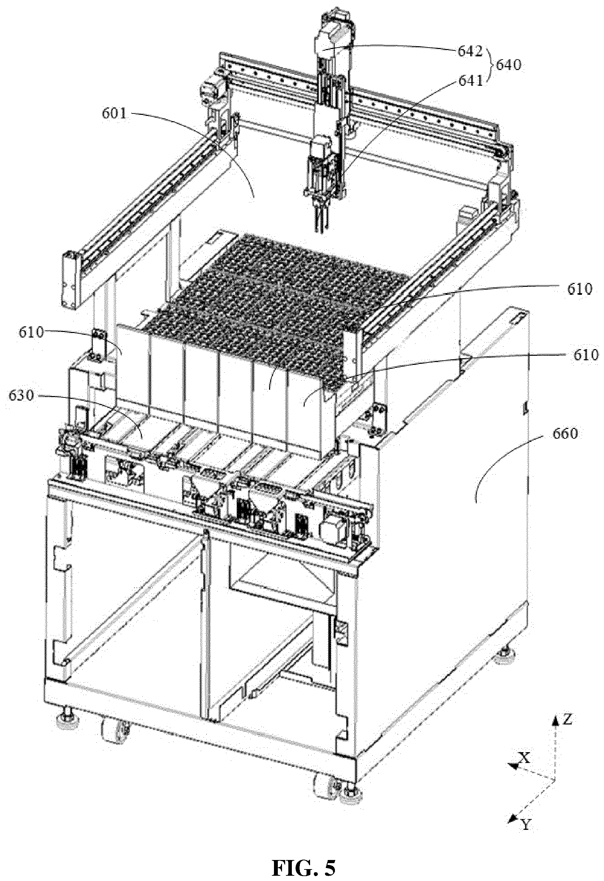

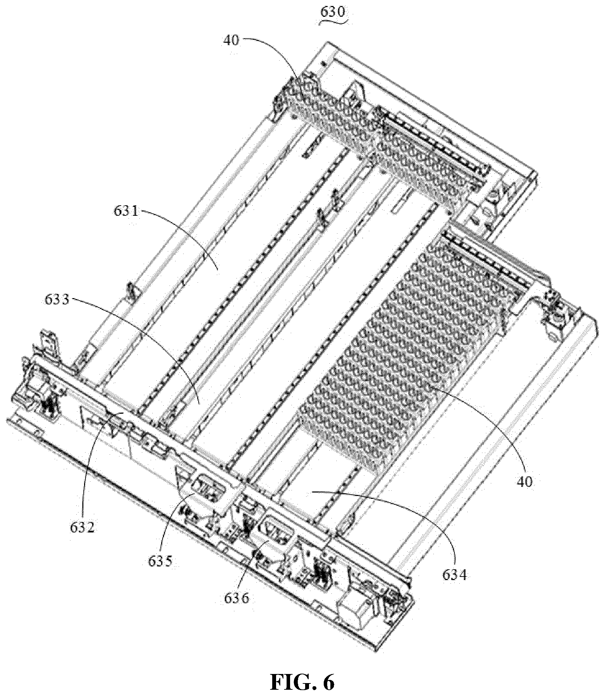

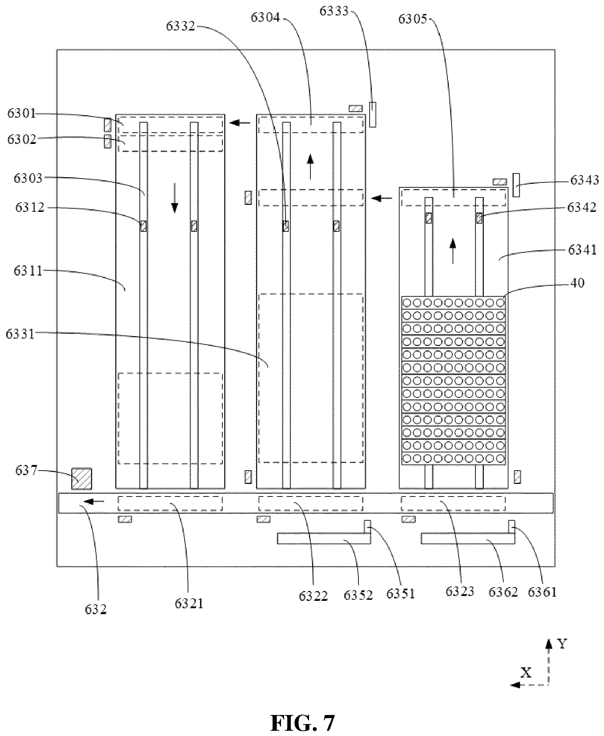

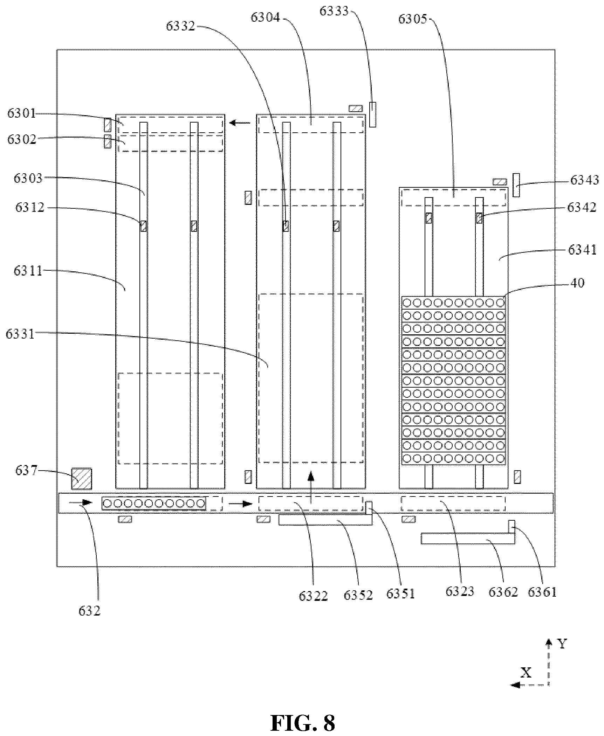

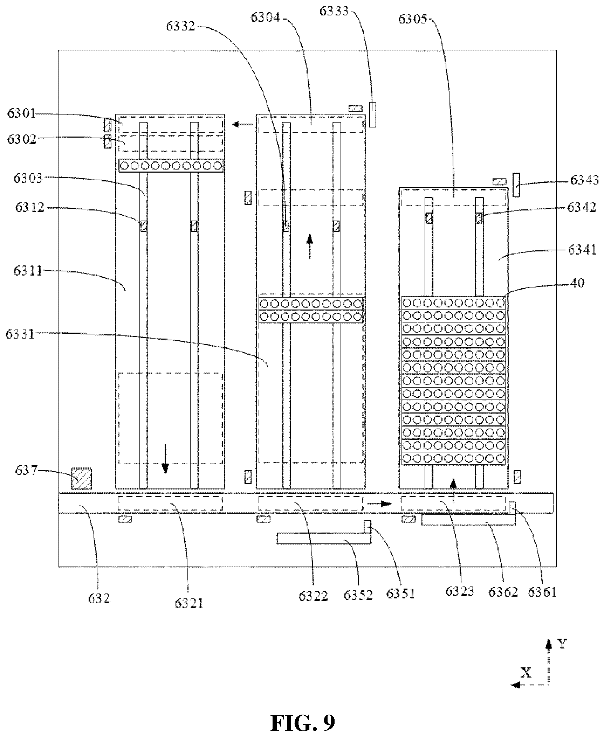

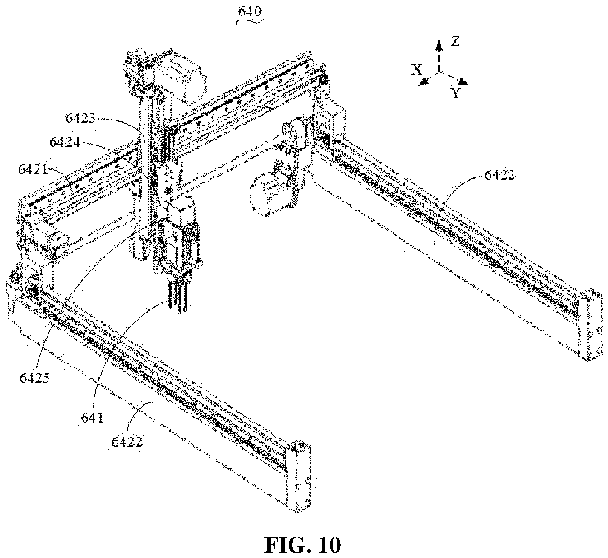

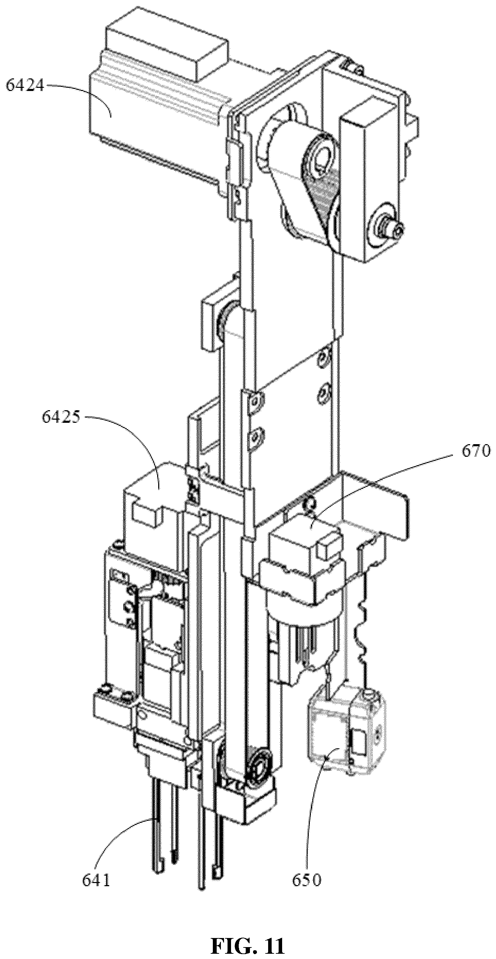

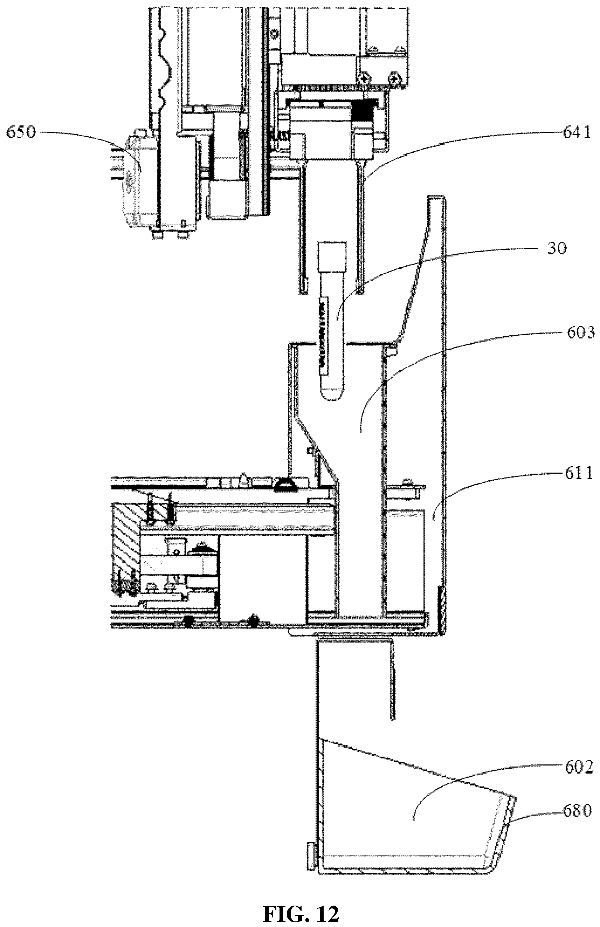

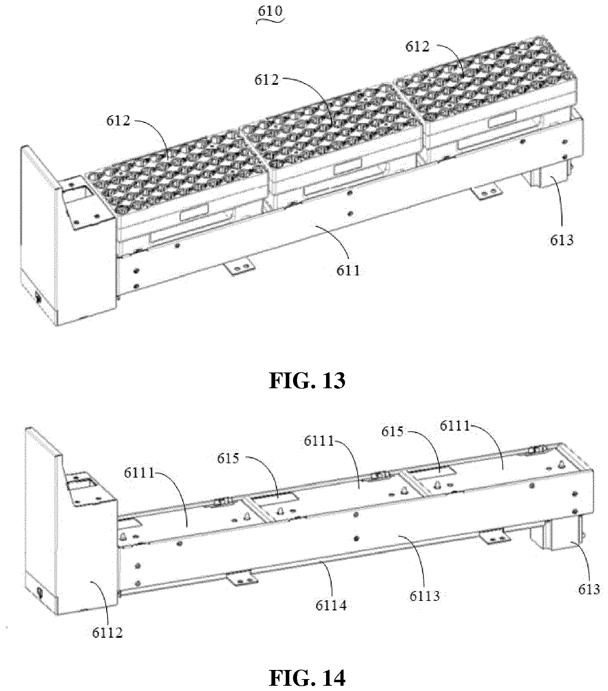

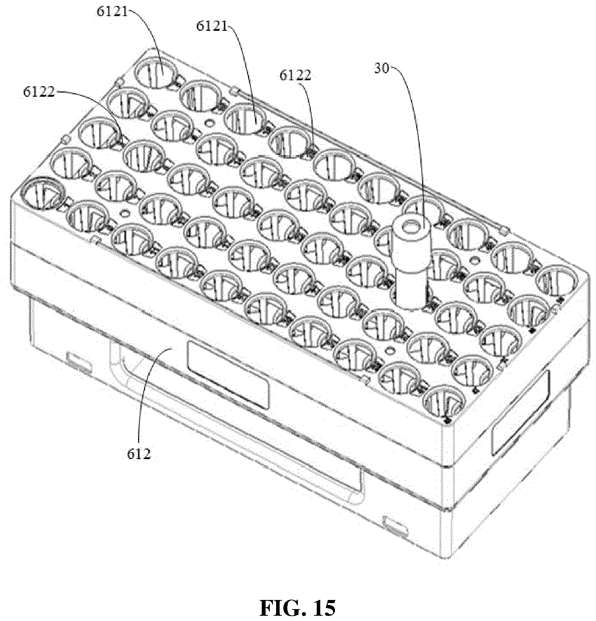

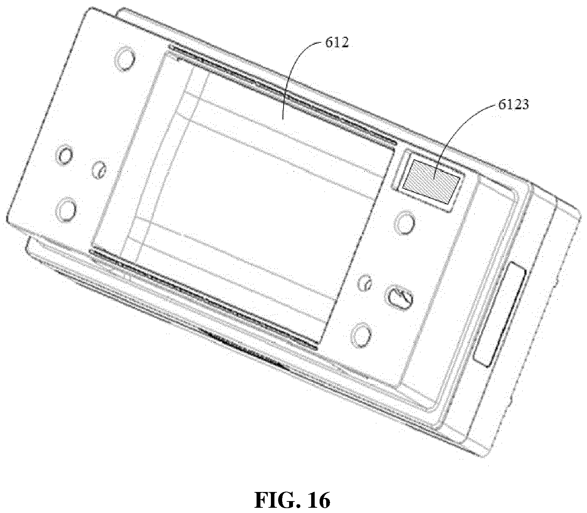

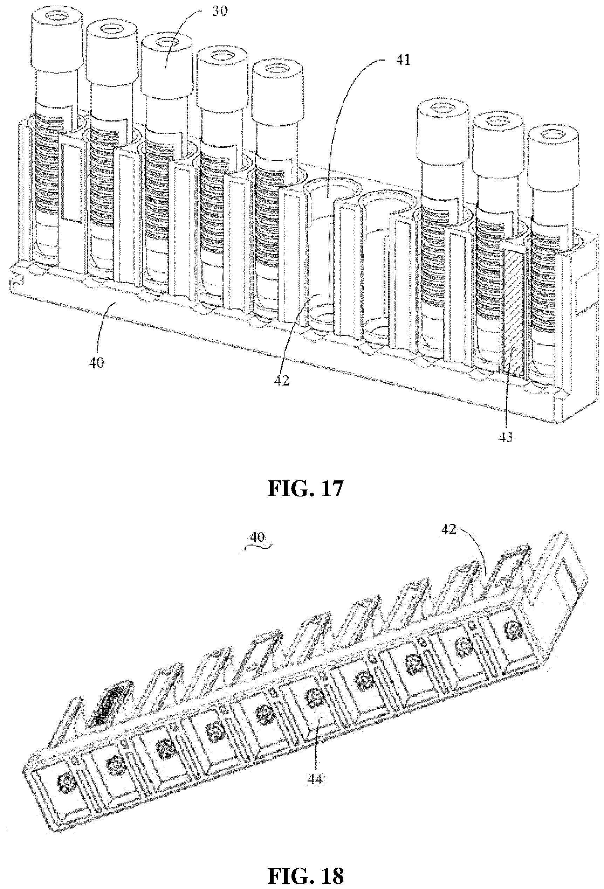

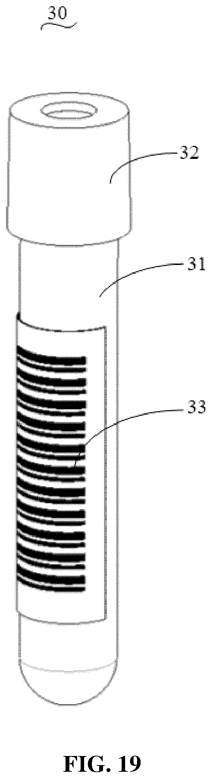

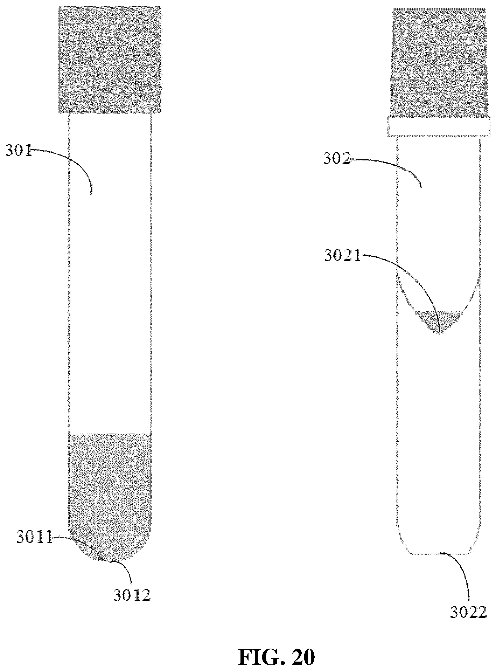

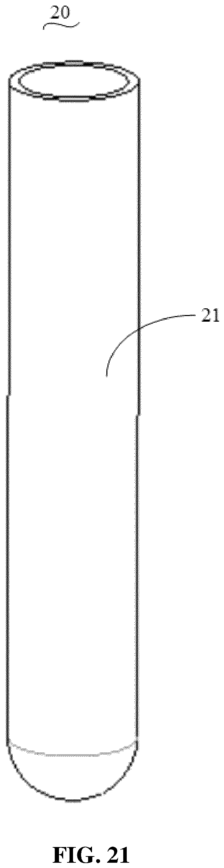

As illustrated in FIG. 1 to FIG. 21, a sample management apparatus 600 provided by an embodiment of the invention includes a storage mechanism 610, a dispatch mechanism 630 and a transfer mechanism 640. The storage mechanism 610 is configured to at least store a sample container 30 containing the sample, so as to achieve the storage of the sample container 30 in the sample management apparatus 600, thereby facilitating a sample loading management and continuous output of a large number of samples by the sample management apparatus 600. The dispatch mechanism 630 is configured to dispatch a container rack 40 to output and input the container rack 40 in the sample management apparatus 600, thereby facilitating a recycling of the container rack 40. The container rack 40 is configured to at least load with the sample container 30, that is, the container rack 40 is at least used as a carrier for output of the sample container 30 by the sample management apparatus 600. The container rack 40 has at least two container positions, each of which may hold a sample container 30. The transfer mechanism 640 is configured to at least transfer the sample container 30 containing a to-be- processed sample from the storage mechanism 610 into the container rack 40 located on the dispatch mechanism 630, to achieve the transfer of the sample container 30 in the sample management apparatus 600. A target sample container 30 specifically refers to a sample container 30 to be transferred by the transfer mechanism 640 in a particular transfer operation. In a specific application, after the transfer mechanism 640 transfers the sample container 30 into the container rack 40, the dispatch mechanism 630 may dispatch the container rack 40 loaded with the sample container 30 to a designated position, thereby achieving the output of the container rack 40 and the sample container 30 in the sample management apparatus 600. The sample container 30 containing the sample output from the sample management apparatus 600 may be transported to different sample processing apparatuses 100 for aspirating the sample.

In the embodiment, the storage mechanism 610 for storing the sample container 30 is integrated into the sample management apparatus 600, and the dispatch mechanism 630 and the transfer mechanism 640 are arranged in the sample management apparatus 600. The transfer mechanism 640 transfers the sample container 30 containing the sample from the storage mechanism 610 into the container rack 40 located in the dispatch mechanism 630, thereby achieving automatic loading of the sample and facilitating the reduction of manpower.

In an implementation, the dispatch mechanism 630 and the storage mechanism 610 are not arranged on a same layer, and the dispatch mechanism 630 and the storage mechanism 610 are arranged in layers. In the implementation, the dispatch mechanism 630 and the storage mechanism 610 are arranged in layers in a height direction (i.e., a vertical direction Z) of the sample management apparatus 600, which can not only ensure that the storage mechanism 610 has a large enough capacity space to meet sample loading requirements of the mass sample containers 30, but also facilitate the reduction of a horizontal size of the sample management apparatus 600, thereby reducing a space occupied by the sample management apparatus 600.

In an implementation, the dispatch mechanism 630 is arranged below the storage mechanism 610 in the height direction of the sample management apparatus 600. The storage mechanism 610 and the dispatch mechanism 630 are arranged in upper and lower layers respectively, and the storage mechanism 610 is located in the upper layer. With this arrangement, a height of the storage mechanism 610 may be moderate, which is convenient for an operator to take and put the sample container 30. In a specific application, a positional relationship between the storage mechanism 610 and the dispatch mechanism 630 is not limited thereto. For example, in an alternative implementation, the dispatch mechanism 630 may be arranged above the storage mechanism 610 in the height direction of the sample management apparatus 600.

In an implementation, the dispatch mechanism 630 includes a loading support platform 6311 and a first drive component 6312. The loading support platform 6311 is provided with a loading position, and the loading position is used for supporting a container rack 40 with at least two container positions for receiving the sample containers 30 transferred by the transfer mechanism 640. The first drive component 6312 is configured to drive the container rack 40 at the loading position to move away from the loading position. The transfer mechanism 640 is configured to at least transfer the sample container 30 containing the sample from the storage mechanism 610 to a container position of the container rack 40 at the loading position, so as to achieve the loading of the sample container 30. The loading position is a position at which the container rack 40 receives the sample container 30 transferred by the transfer mechanism 640. The transfer mechanism 640 may transfer the sample container 30 between the loading position and the storage mechanism 610. The implementation simplifies a movement trajectory of the transfer mechanism 640 by setting a fixed loading position on the loading support platform 6311.

In an implementation, the dispatch mechanism 630 is arranged below the storage mechanism 610 in the height direction of the sample management apparatus 600, and the transfer mechanism 640 includes a first clamping jaw 641 and a first drive assembly 642. The first clamping jaw 641 is configured to clamp and release the sample container 30. The first drive assembly 642 is configured to at least drive the first clamping jaw 641 to move the sample container 30 from the storage mechanism 610 to directly above the loading position, so as to enable the first clamping jaw 641 to place the sample container 30 into the container rack 40 at the loading position. In the implementation, the transfer mechanism 640 can transfer the sample container 30 between the storage mechanism 610 and the dispatch mechanism 630 only by providing a set of clamping jaw and drive assembly, which has a simple structure and low cost.

In an alternative implementation, the dispatch mechanism 630 is arranged above the storage mechanism 610 in the height direction of the sample management apparatus 600, and the sample management apparatus 600 is provided with a transit position between the storage mechanism 610 and the dispatch mechanism 630. The transfer mechanism 640 includes a second clamping jaw, a second drive assembly, a third clamping jaw and a third drive assembly. Both the second clamping jaw and the third clamping jaw are configured to clamp and release the sample container 30. The second drive assembly is configured to at least drive the second clamping jaw to move the sample container 30 from the storage mechanism 610 to the transit position, and the third drive assembly is configured to at least drive the third clamping jaw to move the sample container 30 from the transit position to directly above the loading position, so as to enable the third clamping jaw to place the sample container 30 into the container rack 40 at the loading position. The transit position, the second clamping jaw and the second drive component are arranged below the dispatch mechanism 630. The second drive assembly may at least drive the second clamping jaw in lifting and horizontal movements below the dispatch mechanism 630. The third drive assembly may drive the third clamping jaw to lift above and below the dispatch mechanism 630, and drive the third clamping jaw to move horizontally above the dispatch mechanism 630. In this alternative implementation, because the storage mechanism 610 is located below the dispatch mechanism 630, the transfer mechanism 640 needs to move horizontally to a position above the storage mechanism 610 to clamp and release the sample container 30, and further needs to lift above the dispatch mechanism 630 to clamp and release the sample container 30, which is difficult to achieve by using a set of clamping jaw and drive assembly. As a result, in this alternative implementation, two sets of clamping jaws and drive assemblies are used to respectively complete transfer actions in different ranges, thereby achieving the transfer of the sample container 30 between the storage mechanism 610 and the dispatch mechanism 630. The second drive assembly may at least drive the second clamping jaw in lifting and horizontal movements below the dispatch mechanism 630, so as to transfer the sample container 30 between the transit position and the storage mechanism 610. The third drive assembly may drive the third clamping jaw to lift above and below the dispatch mechanism 630, and may drive the third clamping jaw to move horizontally above the dispatch mechanism 630, so as to transfer the sample container 30 between the transit position and the loading position.

A specific working principle and structure of the transfer mechanism 640 will be described below by taking the transfer mechanism 640 including the first clamping jaw 641 and the first drive assembly 642 as an example. Arrangements of the second clamping jaw, the second drive assembly, the third clamping jaw and the third drive assembly may be referred to the first clamping jaw 641 and the first drive assembly 642, which will not be described in detail below.

In an implementation, the first clamping jaw 641 may be driven by the first drive assembly 642 to perform a three-dimensional movement in a first horizontal direction X (left and right), a second horizontal direction Y (front and back) and the vertical direction Z (up and down), and may further perform a rotational movement.

In an implementation, the first drive assembly 642 includes a first slide guide component 6421, two second slide guide components 6422, a sliding component 6423, a lifting component 6424 and a rotating component 6425. The two second slide guide components 6422 are mounted on a support in the housing 660 of the sample management apparatus 600 and extending along the second horizontal direction Y. The first slide guide component 6421 may be slidably mounted on the two second slide guide components 6422 and extending along the first horizontal direction X, and the first slide guide component 6421 may slide along the two second slide guide components 6422 in the second horizontal direction Y (front-back direction). The sliding component 6423 is connected to the first slide guide component 6421 and may slide along the first slide guide component 6421 in the first horizontal direction X (left-right direction). The lifting component 6424 is arranged on the sliding component 6423 and may perform a lifting movement in the vertical direction Z (up-down direction) relative to the sliding component 6423. The first clamping jaw 641 is arranged at a lower end of the lifting component 6424 for clamping the sample container 30, and the rotating component 6425 is arranged at an upper end of the lifting component 6424 for driving the first clamping jaw 641 to rotate.

In an implementation, the first slide guide component 6421, the two second slide guide components 6422 and the sliding component 6423 of the transfer mechanism 640 are all located above the storage mechanism 610, and the storage mechanism 610 is located above the dispatch mechanism 630, so that the structure is compact and a horizontal area occupied by the sample management apparatus 600 is reduced.

In an implementation, the sample management apparatus 600 further includes a transport track 632, and the loading support platform 6311 is arranged on one side of the transport track 632. The transport track 632 is configured to transport the container rack 40, loaded with the sample container 30 containing a to-be-tested sample, on the loading support platform 6311 out of the sample management apparatus 600 in the first horizontal direction X, for example, transport to the transport apparatus 300, so that the transport apparatus 300 transports the container rack 40 to at least one sample processing apparatus 100.

In an implementation, the first drive component 6312 includes a first push component and a first power component. The first power component is configured to drive the first push component to move back and forth between the loading position and the transport track 632, such that the first push component can push the container rack 40 from the loading position to the transport track 632.

In an implementation, the loading support platform 6311 extends along the second horizontal direction Y, and the loading support platform 6311 is provided with two first slipper guides 6303. The first slipper guide 6303 may be specifically an elongated trench. The first push component of the first drive component 6312 may rise and fall in the vertical direction Z under the drive of the first power component. When the first push component is in an ascending position, a top end of the first push component protrudes from a top surface of the loading support platform 6311, for example, the top end of the first push component protrudes from the top surface of the loading support platform 6311 by a certain distance. When the first push component is in a descending position, the top end of the first push component is lower than the top surface of the loading support platform 6311, for example, the top end of the first push component is lower than the top surface of the loading support platform 6311 by a certain distance. In this way, when the first push component is in the ascending position, the first push component may move (forward or backward) in the second horizontal direction Y under the drive of the first power component, and the container rack 40 may be pushed to move in the second horizontal direction Y when the first push component moves. When the first push component is in the descending position, the first push component may also move in the second horizontal direction Y (forward or backward) under the drive of the first power component, and at this time, the movement of the first push component may avoid a bottom of the container rack 40 without pushing the container rack 40 to move.

In an implementation, the loading support platform 6311 is provided with at least two loading positions, and each of the at least two loading positions supports a respective container rack 40 for receiving the sample containers 30 transferred by the transfer mechanism 640. In the implementation, the number of loading positions is set to more than two, which is beneficial for the transfer mechanism 640 to sort the sample containers 30 with two different classification attributes during a period of time when transferring the sample containers 30, and operations for putting the sample containers 30 back into the storage mechanism 610 are reduced, thereby improving an efficiency for transferring the sample containers 30. In a specific application, the number of loading positions may be only one.

In an implementation, the at least two loading positions include a first loading position 6301 and a second loading position 6302. Each of the first loading position 6301 and the second loading position 6302 is configured to support a respective container rack 40 for receiving the sample containers 30 transferred by the transfer mechanism 640. The transfer mechanism 640 may transfer the sample container 30 between the first loading position 6301 and the storage mechanism 610, and may also transfer the sample container 30 between the second loading position 6302 and the storage mechanism 610.

In an implementation, the at least two loading positions are arranged side by side in a direction in which the first drive component 6312 drives the container rack 40 to move, so that the container racks 40 transferred from the at least two loading positions to the transport track 632 may share the first drive component 6312 without the need for an additional auxiliary transfer mechanism.

In an implementation, the loading positions are arranged side by side in the second horizontal direction Y.

In an implementation, a loading assembly 631 includes two loading positions, i.e., the first loading position 6301 and the second loading position 6302, respectively. In a specific application, the number of loading positions is not limited to two, for example, may also be more than three.

In an implementation, the sample management apparatus 600 is further configured to recycle the sample container 30, that is, the sample management apparatus 600 has the function of both loading the sample container 30 and recycling the sample container 30. In the implementation, after the sample in the sample container 30 has been aspirated, the container rack 40 loaded with the sample container 30 in which the sample has been aspirated returns to the sample management apparatus 600 for recycling. In a specific application, in an alternative implementation, the sample management apparatus 600 may only have the function of loading the sample container 30 and does not have the function of recycling the sample container 30. The sample management apparatus 600 is a pre-processing apparatus, and a post-processing apparatus may be additionally provided. The pre-processing apparatus and the post-processing apparatus are arranged independently of each other, and the post-processing apparatus is configured to recycle the sample container 30. In the alternative implementation, the container rack 40 loaded with the sample container 30 in which the sample has been aspirated does not return to the sample management apparatus 600, but is unloaded in a fixed area (i.e., the post-processing apparatus).

In an implementation, the dispatch mechanism 630 also includes a recycle support platform 6331, a second drive component 6332 and a third drive component 6333. The recycle support platform 6331 is provided with a recycle position 6304 arranged directly opposite to the loading position in the first horizontal direction X. The second drive component 6332 is configured to drive a container rack 40, loaded with a sample container 30 containing a to-be-recycled sample, on the recycle support platform 6331 to move to the recycle position 6304 in the second horizontal direction Y. The transfer mechanism 640 is further configured to transfer the sample container 30 from the container rack 40 at the recycle position 6304 to the storage mechanism 610 or to a sample container recycle component independent of the storage mechanism 610. The third drive component 6333 is configured to drive the container rack 40, which is located at the recycle position 6304 and is unloaded, to move to the loading position in the first horizontal direction X. The first horizontal direction X is perpendicular to the second horizontal direction Y. The recycle support platform 6331 may be configured to support the container rack 40 for recycling the sample container 30. An unloaded container rack 40 is also referred to as an empty container rack 40, that is, a container rack 40 that is not loaded with any sample container 30 or other containers, and each accommodating position in the unloaded container rack 40 is unoccupied.

In an implementation, the recycle support platform 6331 has only one recycle position 6304, and the recycle position 6304 may accommodate a container rack 40, which is beneficial for simplifying the movement trajectory of the transfer mechanism 640. In a specific application, in an alternative implementation, the recycle support platform 6331 may have more than two recycle positions 6304.

In an implementation, the dispatch mechanism 630 further includes a buffer support platform 6341, a fourth drive component 6342 and a fifth drive component 6343. The recycle support platform 6331 is arranged between the loading support platform 6311 and the buffer support platform 6341 in the first horizontal direction X, and the buffer support platform 6341 is provided with a transfer position 6305. The fourth drive component 6342 is configured to drive an unloaded container rack 40 on the buffer support platform 6341 to move to the transfer position 6305 in the second horizontal direction Y. The fifth drive component 6343 is configured to drive the unloaded container rack 40 at the transfer position 6305 to move to the recycle support platform 6331 in the first horizontal direction X. The second drive component 6332 is further configured to drive the unloaded container rack 40, which is moved from the transfer position 6305 to the recycle support platform 6331, to move to the recycle position 6304 in the second horizontal direction Y. The buffer support platform 6341 is mainly used for storing the unloaded container rack 40 to meet dispatch requirements of the sample container 30, which is beneficial to meet the requirements of the sample management apparatus 600 and the sample processing system 10 for continuous processing of a large batch of samples. The unloaded container rack 40 transferred from the recycle support platform 6331 to the loading position may be an unloaded container rack 40 transferred to the loading position after the sample container 30 therein is recycled at the recycle position 6304, and may also be an unloaded container rack 40 transferred from the buffer support platform 6341 to the recycle support platform 6331 and then transferred from the recycle support platform 6331 to the loading position. During a start-up preparation process of the sample management apparatus 600, the unloaded container rack 40 is first transferred from the buffer support platform 6341 to the recycle support platform 6331, and then transferred from the recycle support platform 6331 to the loading position of the loading support platform 6311, thereby completing the automatic loading of the container rack 40. During a shutdown preparation process of the sample management apparatus 600, the container rack 40 that completes the recycle of the sample container 30 is first transferred from the recycle position 6304 to the loading position, then is transferred from the loading position to the transport track 632, and then is transferred from the transport track 632 to the buffer support platform 6341, thereby completing the recycle of the container rack 40. In a specific application, in an alternative implementation, a buffer assembly 634 may also be omitted and a recycle assembly 633 may serve as both the buffer component for the unloaded container rack 40 and the recycle component for the processed container rack 40.

In an implementation, the loading support platform 6311, the recycle support platform 6331 and the buffer support platform 6341 are arranged on the same side of the transport track 632 in the second horizontal direction Y. The transport track 632 is further configured to transport the unloaded container rack 40 on the loading support platform 6311 to the buffer support platform 6341 and transport the container rack 40 loaded with a sample container 30 containing a to-be-recycled sample to the recycle support platform 6331.

In an implementation, the recycle support platform 6331 is provided with a reception position, the reception position and the recycle position 6304 are arranged in the second horizontal direction Y, and the reception position and the transfer position 6305 are arranged in the first horizontal direction X. The fifth drive component 6343 is configured to drive the unloaded container rack 40 to move from the transfer position 6305 to the reception position in the first horizontal direction X, and the second drive component 6332 is further configured to drive the unloaded container rack 40 to move from the reception position to the recycle position 6304 in the second horizontal direction Y.

In an implementation, the recycle process of the sample container 30 includes the following operations. After the sample container 30 in the container rack 40 has completed a sample aspiration operation in the sample processing apparatus 100, the transport apparatus 300 transports the container rack 40 to the transport track 632. Then, the transport track 632 transports the container rack 40 to a side of the recycle support platform 6331. Then, the second drive component 6332 or another drive component (for example, a sixth drive component 635 hereinafter, the sixth drive component 635 is illustrated in the figure) pushes the container rack 40 from the transport track 632 to the recycle support platform 6331. Then, the second drive component 6332 pushes the container rack 40 to the recycle position 6304, and the transfer mechanism 640 transfers the sample container 30 in the container rack 40 at the recycle position 6304 into the storage mechanism 610, so that the operator takes the sample container 30 away, and the recycle of the sample container 30 is completed. In the implementation, after the sample in the sample container 30 has been aspirated, the sample management apparatus 600 recycles the sample container 30 to the storage mechanism 610.

In an implementation, a structure of the recycle support platform 6331 and a structure of the buffer support platform 6341 are similar to that of the loading support platform 6311, and a structure of the second drive component 6332 and a structure of the fourth drive component 6342 are similar to that of the first drive component 6312, which will not be described in detail here.

In an implementation, the loading support platform 6311, the recycle support platform 6331 and the buffer support platform 6341 are arranged side by side in the horizontal direction. Specifically, the loading support platform 6311, the recycle support platform 6331 and the buffer support platform 6341 are arranged side by side in the first horizontal direction X in sequence, and the recycle support platform 6331 is arranged between the loading support platform 6311 and the buffer support platform 6341 in the first horizontal direction X. The first drive component 6312 is configured to drive the container rack 40 on the loading support platform 6311 to move in the second horizontal direction Y. The second drive component 6332 is configured to drive the container rack 40 on the recycle support platform 6331 to move in the second horizontal direction Y. The third drive component 6333 is configured to drive the container rack 40, which is located at the recycle position 6304 and is unloaded, to move to the loading position in the first horizontal direction X. The fourth drive component 6342 is configured to drive the container rack 40 on the buffer support platform 6341 to move in the second horizontal direction Y. The fifth drive component 6343 is configured to drive the unloaded container rack 40 at the transfer position 6305 to move to the recycle support platform 6331 in the first horizontal direction X. In the implementation, the loading support platform 6311 and the recycle support platform 6331 are arranged side by side and adjacent to each other, so that during the operation of the sample processing system 10, the container rack 40, after completing the recycle of the sample container 30 at the recycle position 6304, may be directly transferred from the recycle position 6304 to the loading position for reloading the sample container 30 without the need to return to the buffer support platform 6341 first, thereby improving the efficiency for transferring the container rack 40. In a specific application, the arrangement positions of the loading support platform 6311, the recycle support platform 6331 and the buffer support platform 6341 are not limited thereto. For example, in an alternative implementation, the loading support platform 6311 may be arranged between the recycle support platform 6331 and the buffer support platform 6341 in the first horizontal direction X, that is, the recycle support platform 6331, the loading support platform 6311 and the buffer support platform 6341 may be arranged side by side in the first horizontal direction X in sequence. Alternatively, in an alternative implementation, the buffer support platform 6341 may be arranged between the loading support platform 6311 and the recycle support platform 6331 in the first horizontal direction X, that is, the loading support platform 6311, the buffer support platform 6341 and the recycle support platform 6331 may be arranged side by side in the first horizontal direction X in sequence.

In an implementation, a size of the loading support platform 6311 is greater than a size of the buffer support platform 6341 in the second horizontal direction Y, and a size of the recycle support platform 6331 is greater than the size of the buffer support platform 6341 in the second horizontal direction Y, that is, a length of the loading support platform 6311 is greater than a length of the buffer support platform 6341, and a length of the recycle support platform 6331 is greater than the length of the buffer support platform 6341.

In an implementation, the size of the loading support platform 6311 is equal to the size of the recycle support platform 6331 in the second horizontal direction Y, that is, the length of the loading support platform 6311 is equal to the length of the recycle support platform 6331.

In an implementation, the loading position is arranged at an end, away from the transport track 632, of the loading support platform 6311 in the second horizontal direction Y, the recycle position 6304 is arranged at an end, away from the transport track 632, of the recycle support platform 6331 in the second horizontal direction Y, and the transfer position 6305 is arranged at an end, away from the transport track 632, of the buffer support platform 6341 in the second horizontal direction Y.

In an implementation, the sample management apparatus 600 is provided with a clearance space located directly above the loading position and the recycle position 6304, the clearance space allows the transfer mechanism to drive the sample container 30 to descend from directly above the loading position, and allows the transfer mechanism to drive the sample container 30 to ascend from the recycle position 6304. In a specific application, in an alternative implementation, the clearance space may also be divided into two different openings. Specifically, the storage mechanism 610 is provided with a loading opening located directly above the loading position and with a recycle opening located directly above the recycle position 6304. The loading opening allows the transfer mechanism to drive the sample container 30 to descend from directly above the loading position, the recycle opening allows the transfer mechanism to drive the sample container 30 to ascend from the recycle position 6304, and the loading opening and the recycle opening are arranged separately from each other.

In an implementation, the clearance space and the storage mechanism 610 are arranged in the second horizontal direction Y, and the clearance space is arranged behind the storage mechanism 610 in the second horizontal direction Y.

In an implementation, the loading position is arranged at an end, away from the transport track 632, of the loading support platform 6311 in the second horizontal direction Y. The recycle position 6304 is arranged at an end, away from the transport track 632, of the recycle support platform 6331 in the second horizontal direction Y. The transfer position 6305 is arranged at an end, away from the transport track 632, of the buffer support platform 6341 in the second horizontal direction Y. The distance from the loading position to the transport track 632 in second horizontal direction Y is greater than the distance from the transfer position to the transport track 632 in the second horizontal direction Y. The distance from the recycle position 6304 to the transport track 632 in the second horizontal direction Y is greater than the distance from the transfer position to the transport track 632 in the second horizontal direction Y. In the implementation, the distance from the loading position to the transport track 632 is greater than the distance from the transfer position 6305 to the transport track 632, and the distance from the recycle position 6304 to the transport track 632 is greater than the distance from the transfer position 6305 to the transport track 632. The length of the loading support platform 6311 extending in the second horizontal direction Y is greater than the length of the buffer support platform 6341 extending in the second horizontal direction Y, and the length of the recycle support platform 6331 extending in the second horizontal direction Y is greater than the length of the buffer support platform 6341 extending in the second horizontal direction Y. Because the transfer mechanism 640 needs to interact with the container racks 40 at the loading position and the recycle position 6304, for example, transfer the sample container 30, it is necessary to reserve a clearance space above the loading position and the recycle position 6304, so that the transfer mechanism 640 can clamp the sample container 30 to move through the space. Here, the lengths of the loading support platform 6311 and the recycle support platform 6331 are both set to be longer, and the length of the buffer support platform 6341 is set to be shorter. The distance between the loading position and the transport track 632 and the distance between the recycle position 6304 and the transport track 632 are both set to be greater than the distance between the transfer position 6305 and the transport track 632. In this way, it not only facilitates the arrangement of the clearance space so that the clearance space will not affect the placement of the sample container 30 in the storage mechanism 610, but also can fully utilize a space left in the buffer support platform 6341 compared to the loading support platform 6311 and the recycle support platform 6331 to arrange other structures, thereby further improving a compactness of the structure of the sample management apparatus 600. Although the dispatch mechanism 630 is located below the storage mechanism 610, the clearance space is arranged such that the loading position and the recycle position 6304 of the dispatch mechanism 630 are not shielded by the storage mechanism 610, which is beneficial for the transfer mechanism 640 to transfer the sample container 30.

In an implementation, the transport track 632 is a single track capable of transporting the container rack 40 forward and backward in the first horizontal direction X. Herein, the transport track 632 is a single track, which has a simple structure and is further beneficial for reducing the volume and cost of the sample management apparatus 600. In a specific application, in an alternative implementation, the transport track 632 may also be arranged to include two tracks with opposite transport directions.

In an implementation, the dispatch mechanism 630 further includes a sixth drive component 635, a seventh drive component 636 and a third information acquisition component 637. The sixth drive component 635 is arranged beside the transport track 632 and directly opposite to the recycle support platform 6331, so as to block the container rack 40, loaded with a sample container 30 containing a to-be-recycled sample, on the transport track 632 and to push the container rack 40 to the recycle support platform 6331 in the second horizontal direction Y (backward). The seventh drive component 636 is arranged beside the transport track 632 and directly opposite to the buffer support platform 6341, so as to block the unloaded container rack 40 on the transport track 632 and to push the container rack 40 to the buffer support platform 6341 in the second horizontal direction Y (backward). The third information acquisition component 637 is arranged on a side of the transport track 632 and is arranged between the loading support platform 6311 and the transport apparatus 300 in the first horizontal direction X, to acquire label information of the container rack 40, on the transport track 632, passing through the third information acquisition component. The third information acquisition component 637 is a label reading device or a camera.

In an implementation, the sixth drive component 635 includes a first blocking member 6351, a first pushing member 6352 and a first power member. The first power member may push the first blocking member 6351 and the first pushing member 6352 to move synchronously in the second horizontal direction Y. The first blocking member 6351 is configured to block the container rack 40 moving along the first horizontal direction X in the transport track 632 at a second workstation 6322, and the first pushing member 6352 is configured to push the container rack 40 at the second workstation 6322 in the transport track 632 to the recycle support platform 6331. The seventh drive component 636 includes a second blocking member 6361, a second pushing member 6362 and a second power member. The second power member may push the second blocking member 6361 and the second pushing member 6362 to move synchronously in the second horizontal direction Y. The second blocking member 6361 is configured to block the container rack 40 moving along the first horizontal direction X in the transport track 632 at a third workstation 6323, and the second pushing member 6362 is configured to push the container rack 40 at the third workstation 6323 in the transport track 632 to the buffer support platform 6341. In the implementation, the first blocking member 6351 and the first pushing member 6352 share one power member (i.e., the first power member) for a driven movement, and the second blocking member 6361 and the second pushing member 6362 share one power member (i.e., the second power member) for a driven movement. In a specific application, in an alternative implementation, the first blocking member 6351 and the first pushing member 6352 may be driven by two power members respectively, and the second blocking member 6361 and the second pushing member 6362 may be driven by two power members respectively.

In an implementation, the sample management apparatus 600 further includes a controller 400. The transfer mechanism 640 is controlled by the controller 400 to at least transfer a target sample container 30 containing a to-be-processed sample from the storage mechanism 610 into a container rack 40 located on the dispatch mechanism 630. The controller 400 is configured to: control the transfer mechanism 640 to transfer the sample containers 30 with different classification attributes into different container racks 40 based on the classification attributes of the sample containers 30. The transfer mechanism 640 may be controlled by the controller 400 to sort and place the sample containers 30 with different classification attributes into different container racks 40, so that a single container rack 40 is loaded with the sample containers 30 with a same classification attribute, thereby shortening a transport path after the container rack 40 has been output from the sample management apparatus 600. For example, the respective sample containers 30 in one container rack 40 may be transferred to the same sample processing apparatus 100 for aspiration processing, instead of being transferred multiple times, thereby improving efficiency when processing a large number of samples.

In an implementation, the sample management apparatus 600 further includes a first information acquisition component 650. The first information acquisition component 650 is configured to identify a target sample container 30. The first information acquisition component 650 is in communication and/or electrical connection with the controller 400. The controller 400 is configured to: determine a classification attribute of the target sample container 30 based on feedback information from the first information acquisition component 650. The classification attribute of the sample container 30 may be set in advance or may be manually set by the operator, for example, the sample containers 30 are classified based on to-be-processed items that can be executed by different sample processing apparatuses 100, or are classified based on appearance types of the sample containers 30 that can be processed by different sample processing apparatuses 100, or the like. The first information acquisition component 650 is arranged to at least assist the controller 400 in acquiring a to-be-processed item of the sample in the sample container 30 and/or an appearance characteristic of the sample container 30, so that the controller 400 may quickly determine the classification attribute of the sample container 30, and control the transfer mechanism 640 to sort and place the sample containers 30 with different classification attributes into different container racks 40 based on the classification attribute, thereby achieving automatic sorting during the transfer of the sample container 30 into the container rack 40.

In an implementation, the first information acquisition component 650 is configured to identify the sample container 30 after the transfer mechanism 640 clamps the sample container 30 from the storage mechanism 610 and before the transfer mechanism 640 transfers the sample container 30 to the container rack 40 at the loading position. The controller 400 is configured to control the transfer mechanism 640 to place at least two sample containers 30 into the container racks 40 at the at least two loading positions respectively based on feedback information from the first information acquisition component 650.

In an implementation, the controller 400 is configured to: at least acquire characteristic information of the sample container 30 based on the feedback information from the first information acquisition component 650, determine a container type of the sample container 30, and control the transfer mechanism 640 to place at least two sample containers 30 with different container types into the container racks 40 at the at least two loading positions, respectively.

In an implementation, the controller 400 is configured to: at least acquire information on the sample in the sample container 30 based on feedback information from the first information acquisition component 650, determine a type of a to-be-processed item for the sample in the sample container 30, and control the transfer mechanism 640 to place at least two sample containers 30 containing the samples with different types of to-be-processed items into the container racks 40 at the at least two loading positions, respectively.

In an implementation, the controller 400 is configured to: determine a classification attribute of the target sample container 30 based on feedback information from the first information acquisition component 650; determine whether the container rack 40 at the loading position is loaded with a sample container 30 having a classification attribute that is same as the classification attribute of the target sample container 30; and if so, control the transfer mechanism 640 to place the target sample container 30 into the container rack 40, that is loaded with the sample container 30 having the same classification attribute as the target sample container 30, at the loading position. The loading position is a position at which the container rack 40 receives the sample container 30 transferred by the transfer mechanism 640. The transfer mechanism 640 may transfer the sample container 30 between the loading position and the storage mechanism 610. The fixed loading position is arranged on the loading support platform 6311, which is beneficial for simplifying the movement trajectory of the transfer mechanism 640. In the implementation, before a certain target sample container 30 is transferred to the container rack 40, it may be determined firstly whether the container rack 40 at the loading position is loaded with the sample container 30 having a classification attribute that is same as a classification attribute of the target sample container 30. If the container rack 40 is loaded with the sample container 30 having the same classification attribute as the target sample container 30, the target sample container 30 is placed into the container rack 40 at the loading position. If the container rack 40 is loaded with the sample container 30 having a classification attribute that is different from a classification attribute of the target sample container 30, the target sample container 30 may be transferred to another position, for example, the target sample container 30 may be placed back into the storage mechanism 610 or placed into another position for storing and waiting. With this implementation, automatic and accurate sorting of the sample containers 30 can be achieved.

Alternatively, in an alternative implementation, the controller 400 may be configured to: determine a classification attribute of the target sample container 30 based on the feedback information from the first information acquisition component 650; determine whether the container rack 40 at the loading position is assigned with a classification attribute that is same as the classification attribute of the target sample container 30; and if so, control the transfer mechanism 640 to place the target sample container 30 into the container rack 40, that is assigned with the same classification attribute as the target sample container 30, at the loading position. In the alternative implementation, when the transfer mechanism 640 places a sample container 30 into an unloaded container rack 40 at the loading position, the controller 400 may assign a classification attribute to the container rack 40 based on the first sample container 30 placed into the container rack 40. When the target sample container 30 is required to be transferred into the container rack 40, it may be determined whether the classification attribute of the target sample container 30 is the same as the classification attribute assigned to the container rack 40. If the classification attribute of the target sample container 30 is the same as the classification attribute assigned to the container rack 40, the target sample container 30 is placed into the container rack 40 at the loading position. If the classification attribute of the target sample container 30 is different from the classification attribute assigned to the container rack 40, the target sample container 30 may be transferred to another position.

In an implementation, the controller 400 is further configured to: if it is determined that the container rack 40 at the loading position is not loaded with the sample container 30 having the same classification attribute as the target sample container 30, further determine whether there is an unloaded container rack 40 at the loading position, and if so, control the transfer mechanism 640 to place the target sample container 30 into the unloaded container rack 40 at the loading position. With this implementation, it is also possible to prevent sample containers 30 with different classification attributes from being sorted in the same container rack 40. Alternatively, in an alternative implementation, the controller 400 is further configured to: if it is determined that there is no container rack 40 assigned with the same classification attribute as the target sample container 30 at the loading position, further determine whether there is an unloaded container rack 40 at the loading position, and if so, control the transfer mechanism 640 to place the target sample container 30 into the unloaded container rack 40 at the loading position.

In an implementation, the controller 400 is further configured to: if it is determined that the container rack 40 at the loading position is not loaded with the sample container 30 having the same classification attribute as the target sample container 30 and there is no unloaded container rack 40 at the loading position, or if it is determined that there is no container rack 40 assigned with the same classification attribute as the target sample container 30 and there is no unloaded container rack 40 at the loading position, control the transfer mechanism 640 to place the target sample container 30 into the storage mechanism 610. With this implementation, it is also possible to prevent sample containers 30 with different classification attributes from being sorted in the same container rack 40. In a specific application, in an alternative implementation, a buffer position may be separately provided in the sample management apparatus 600, and when it is determined that the container rack 40 at the loading position is not loaded with the sample container 30 having the same classification attribute as the target sample container 30 and there is no unloaded container rack 40 at the loading position, the transfer mechanism 640 may be controlled to place the target sample container 30 onto the buffer position.

In the above implementations, after it is determined that the container rack 40 at the loading position is not loaded with the sample container 30 having the same classification attribute as the target sample container 30, or after it is determined that there is no container rack 40 assigned with the same classification attribute as the target sample container 30 at the loading position, it is further determined whether there is an unloaded container rack 40 at the loading position, and then the transfer mechanism 640 is controlled to place the target sample container 30 into the unloaded container rack 40 at the loading position or into the storage mechanism 610. In an alternative implementation, the controller 400 may be configured to: if it is determined that the container rack 40 at the loading position is not loaded with the sample container 30 having the same classification attribute as the target sample container 30, or if it is determined that there is no container rack 40 assigned with the same classification attribute as the target sample container 30 at the loading position, control the transfer mechanism 640 to place the target sample container 30 into the storage mechanism 610 without determining whether there is an unloaded container rack 40 at the loading position. For example, when there is only one loading position and it is determined that there is a container rack 40 placed at the loading position, if the container rack 40 is not loaded with a sample container 30 having the same classification attribute as the target sample container 30 or the container rack 40 at the loading position is assigned with a classification attribute different from the classification attribute of the target sample container 30, the transfer mechanism 640 may be directly controlled to place the target sample container 30 into the storage mechanism 610.

In an implementation, the controller 400 is further configured to: acquire at least a to-be-processed item of a sample in the target sample container 30 based on feedback information from the first information acquisition component 650, and determine the classification attribute of the target sample container 30 based on the to-be-processed item of the sample in the target sample container 30. The controller 400 pre-stores processing items that can be performed by each of the sample processing apparatuses 100 associated with the sample management apparatus 600, and classifies the processing items based on the sample processing apparatuses 100 for performing different processing items, so that the container rack 40 output from the sample management apparatus 600 is required to be transported to only one of the corresponding sample processing apparatuses 100 as far as possible, and different container racks 40 loaded with sample containers 30 having different classification attributes may be transported to different sample processing apparatuses 100 for parallel aspiration processing, thereby improving efficiency when processing a large number of samples.

The controller 400 is not limited to determining the classification attribute of the target sample container 30 based on the to-be-processed item of the sample in the target sample container 30. For example, in an implementation, the controller 400 is configured to: acquire at least an appearance characteristic of the target sample container 30 based on the feedback information from the first information acquisition component 650, and determine the classification attribute of the target sample container 30 based on the appearance characteristic of the target sample container 30. In a specific application, different appearance characteristics of the sample containers 30 may be associated with different classification attributes of the sample containers 30 in advance. The association manner includes at least one of: the appearance characteristics of the different sample containers 30 being associated with different processing items (e.g., a certain appearance characteristic is used to distinguish between different processing items); and the appearance characteristics of the different sample containers 30 being associated with different types of sample containers 30 (e.g., a certain appearance characteristic is used to distinguish between a constant sample container 30 and a micro sample container 30, because some sample processing apparatuses 100 may only aspirate the sample from the constant sample container 30, but cannot aspirate the sample from the micro sample container 30).

In an implementation, the appearance characteristic of the target sample container 30 includes at least one of: contour information of a cap body of the target sample container 30, contour information of a container body of the target sample container 30, a color of the cap body of the target sample container 30 and a position of the sample in the target sample container 30. The contour information of the cap body of the target sample container 30 represents a shape of the cap body, and the contour information of the container body of the target sample container 30 represents a shape of the container body. The contour information of the cap body of the sample container 30, the contour information of the container body of the sample container 30 and the color of the cap body of the sample container 30 may be associated with different processing items, and may also be associated with different types of sample containers 30. For example, the sample containers 30 with different colors of the cap bodies represent sample containers 30 for performing different processing items, or represent different types of sample containers such as the constant sample container 30 and the micro sample container 30. The position of the sample in the sample container 30 is mainly associated with different types of sample containers 30, for example, different positions of the sample in the sample container 30 represent a respective constant sample container 30 or a respective micro sample container 30.

In an implementation, the types of sample containers 30 include a first type of sample container 301 and a second type of sample container 302. The first type of sample container 301 is a constant sample container 30 for containing a sample with a large sample volume, such as the sample volume greater than or equal to 1 mL. The second type of sample container 302 is a micro sample container 30 for containing a sample with a small sample volume, such as the sample volume less than or equal to 0.1 mL. In the implementation, the first type of sample container 301 and the second type of sample container 302 are identified and distinguished for two purposes, one purpose is to facilitate sorting (since some sample processing apparatuses 100 cannot aspirate the sample from the micro sample container 30, it is necessary to sort the constant sample container 30 and the micro sample container 30 into different container racks 40); and the other purpose is to identify the types of the sample containers before aspirating the sample, because the sample processing apparatus 100 aspirates the sample from the first type of sample container 300 and the second type of sample container 302 in different sample volumes or mixing manners.

In an implementation, the sample container 30 includes a second container body 31, a second cap body covered on the second container body 31 and a second label 33 affixed to the second container body 31. The second label 33 is configured to mark encoding information of the sample container 30. The second container body 31 is configured to contain the sample, and the second cap body 32 is configured to close a top opening of the second container body 31 to prevent the sample in the sample container 30 from flowing out of the sample container 30 when it is inverted. When the sample contained in the sample container 30 is a whole blood sample, the whole blood sample will settle after being stored for a long time, and blood cells and plasma will be layered. Therefore, the whole blood sample needs to be mixed upside down before detection. The sample container 30 needs the second cap 32 to close the top opening of the second container body 31, to prevent leakage of the sample in the sample container 30 during mixing. In a specific application, in an alternative implementation, the sample container 30 may not be provided with the second cap body 32, that is, the sample container 30 includes only the second container body 31 and the second label 33 affixed to the second container body 31.

In an implementation, the sample contained the sample container 30 includes but is not limited to a blood sample, a body fluid sample, a urine sample and the like.

In an implementation, a distance from an intra-cavity bottom wall to a container bottom of the first type of sample container 301 is less than a distance from an intra-cavity bottom wall to a container bottom of the second type of sample container 302. The intra-cavity bottom wall of the sample container 30 is a bottom wall inside a cavity of the second container body 31. The container bottom of the sample container 30 is a bottom wall outside the second container body 31. Specifically, the first type of sample container 301 has a first intra-cavity bottom wall 3011 and a first container bottom 3012, and the second type of sample container 302 has a second intra-cavity bottom wall 3021 and a second container bottom 3022. The distance from the first intra-cavity bottom wall 3011 to the first container bottom 3012 is less than the distance from the second intra-cavity bottom wall 3021 to the second container bottom 3022. In this way, it is convenient to quickly determine whether the target sample container 30 is the constant sample container 30 or the micro sample container 30 based on the position of the sample in the target sample container 30.

In an implementation, the first intra-cavity bottom wall 3011 is adjacent to the first container bottom 3012, and the first container bottom 3012 is semicircular. The second intra-cavity bottom wall 3021 is adjacent to the middle of the second container body 31, and the second container bottom 3022 has an arc-shaped truncated shape. In the implementation, the bottom shape, the position of the sample in the container and a relative height of a liquid level of the sample in the first type of sample container 301 are obviously different from those of the second type of sample container 302, which is beneficial for distinguishing quickly between the first type of sample container 301 and the second type of sample container 302.

In an implementation, the first type of sample container 301 is a sample container 30 for containing a venous blood sample and the second type of sample container 302 is a sample container 30 for containing a peripheral blood sample.

In an implementation, the controller 400 is configured to: determine a first target sample container 30 as the first type of sample container 30 based on the feedback information from the first information acquisition component 650, and control the transfer mechanism 640 to place the first target sample container 30 into an unloaded container rack 40 at the first loading position 6301; determine a second target sample container 30 as the first type of sample container 30 based on the feedback information from the first information acquisition component 650, and control the transfer mechanism 640 to place the second target sample container 30 into the container rack 40 loaded with the first target sample container 30 at the first loading position 6301; determine a third target sample container 30 as the second type of sample container 30 based on the feedback information from the first information acquisition component 650, and control the transfer mechanism 640 to place the third target sample container 30 into an unloaded container rack 40 at the second loading position 6302; and determine a fourth target sample container 30 as a third type of sample container 30 based on the feedback information from the first information acquisition component 650, and control the transfer mechanism 640 to place the fourth target sample container 30 into the storage mechanism 610. The first type of sample container 30, the second type of sample container 30 and the third type of sample container 30 are three types of sample containers 30 with different classification attributes.

For example, to-be-processed items of samples A1-A5 are blood routine five-classification test items, and to-be-processed items of samples B1-B5 are C-reactive protein (CRP) test items. A first sample analyzer can support the blood routine five-classification test item, but does not support the CRP test item, and a second sample analyzer can support the CRP test item, but does not support the blood routine five-classification test item. If the samples A1-A5 and the samples B1-B5 are placed into a same container rack 40, the container rack 40 is required to be transported to the first sample analyzer for testing the samples A1-A5, and then transported to the second sample analyzer for testing the samples B1-B5, which will prolong a waiting time for the results of the samples B1-B5. In the implementation, the loading support platform 6311 is provided with the first loading position 6301 and the second loading position 6302, the samples A1-A5 may be placed into the container rack 40 at the first loading position 6301, and the samples B1-B5 may be placed into the container rack 40 at the second loading position 6302, so that the samples A1-A5 may be transported to the first sample analyzer for testing while the samples B1-B5 may be transported to the second sample analyzer for testing. As a result, the waiting time for the results of the samples B 1-B5 can be shortened.

For another example, sample containers corresponding to samples C1-C5 are the first type of sample containers 301 (e.g. the constant sample container 30), and sample containers 30 corresponding to samples D1-D5 are the second type of sample containers 302 (e.g. a micro sample container 30). The first sample analyzer only supports to aspirate the sample from the first type of sample container 301, and the second sample analyzer can support to aspirate the sample from both the first type of sample container 301 and the second type of sample container 302. If the sample containers 30 corresponding to the samples C1-C5 and the sample containers 30 corresponding to the samples D1-D5 are placed in a same container rack 40, the container rack 40 is transported to the first sample analyzer for aspirating the samples C1-C5, and then transported to the second sample analyzer for aspirating the samples D1-D5, which will prolong a waiting time for results of the samples D1-D5. The container rack 40 may also be transported to the second sample analyzer for aspirating the samples C1-C5 and the samples D1-D5. At this time, the first sample analyzer is in an idle state, but the second sample analyzer is in a full-load operation state, which will also prolong the waiting time for the results of the samples D1-D5. In the implementation, the loading support platform 6311 is provided with the first loading position 6301 and the second loading position 6302, the samples C1-C5 may be placed into the container rack 40 at the first loading position 6301, and the samples D1-D5 may be placed into the container rack 40 at the second loading position 6302, so that the samples C1-C5 may be transported to the first sample analyzer for testing, while the samples D1-D5 may be transported to the second sample analyzer for testing. As a result, the waiting time for the results of the samples D1-D5 can be shortened.

In an implementation, the first information acquisition component 650 is configured to identify an identification code of the sample container 30 and an appearance characteristic of the sample container 30. The identification code includes at least one of a two-dimensional code, a bar code and a radio frequency identification (RFID), and the appearance characteristic of the sample container 30 includes at least one of: a shape of a container body, a size of the container body, a sample volume, presence or absence of a cap body, a color of the cap body, a shape of the cap body and a size of the cap body, of the sample container 30. The controller 400 may acquire at least one of: the to-be-processed item of the sample, the sample volume, the type of the sample container 30 and sample number information based on the feedback information from the first information acquisition component 650. In a specific application, in an alternative implementation, the first information acquisition component 650 may be configured only to identify the identification code of the sample container 30 or only to identify the appearance characteristic of the sample container 30.

In an implementation, the first information acquisition component 650 includes at least one of a visual camera, a barcode scanner, a two-dimensional code scanner and a radio frequency code reader.

In an implementation, the first information acquisition component 650 includes a code scanner and the visual camera. The code scanner is configured to read the identification code on the sample container 30. The code scanner may be at least one of the barcode scanner, the two-dimensional code scanner and the radio frequency code reader. The visual camera is configured to take a picture of the sample container 30 to obtain the appearance characteristic of the sample container 30. In a specific application, in an alternative implementation, the first information acquisition component 650 may include only the visual camera and the controller 400 may acquire both the identification code and the appearance characteristic of the sample container 30 based on feedback information from the visual camera.

In an implementation, the first information acquisition component 650 is communicatively connected to the controller 400, and the controller 400 controls the first information acquisition component 650 to acquire the sample number information. The to-be-processed item of the sample may be obtained by querying with the sample number information, for example, the to-be-processed item includes a blood routine test, a CRP test, a glycosylated hemoglobin test, a biochemical test, an immune test, a coagulation test, a staining and smear preparation, etc.

In an implementation, the controller 400 controls the first information acquisition component 650 to capture a picture or video of the sample container 30, identifies the type of the sample container 30 by using information such as the tube cap, the contour of the tube body or the color of the tube cap of the sample container 30, or the position of the sample in the sample container 30, and identifies the sample volume by using the height of the liquid level of the sample relative to the bottom of the sample container 30.

In an implementation, the first information acquisition component 650 is configured to identify the sample container 30 before the transfer mechanism 640 transfers the sample container 30 to the container rack 40 at the loading position.

In an implementation, the first information acquisition component 650 is configured to identify the sample container 30 after the transfer mechanism 640 clamps the sample container 30 from the storage mechanism 610 and before the transfer mechanism 640 transfers the sample container 30 to the container rack 40 at the loading position.

In an implementation, the first information acquisition component 650 is arranged on the transfer mechanism 640, and the first information acquisition component 650 is configured to identify the sample container 30 during the transfer of the sample container 30 by the transfer mechanism 640, which is beneficial for improving the operation efficiency of the sample management apparatus 600 on the one hand, and is beneficial for sorting and placing the sample container 30 in such a way that one container rack 40 is loaded with the sample containers 30 with the same classification attribute on the other hand. In a specific application, in an alternative implementation, the first information acquisition component 650 may also be arranged on the storage mechanism 610 or the dispatch mechanism 630.

In an implementation, the sample management apparatus 600 further includes a second information acquisition component 670 and a controller 400. The second information acquisition component 670 is arranged on the transfer mechanism 640 for identifying the sample container 30 on the storage mechanism 610. The controller 400 is configured to determine a storage status of the sample container 30 on a bracket 612 based on feedback information from the second information acquisition component 670.

In an implementation, the second information acquisition component 670 is a visual camera. The controller 400 may analyze which accommodating holes 6121 in which storage mechanism 610 has the sample container 30 based on a picture or a video of the storage mechanism 610 taken by the second information acquisition component 670. For example, the picture taken of the storage mechanism 610 may be compared with a background picture of the storage mechanism 610 in which the sample container 30 is not placed, and calculation is performed to obtain which accommodating holes 6121 in the storage mechanism 610 have the sample containers 30. If it cannot be determined whether there is a sample container 30 in a certain accommodating hole 6121 or there are sample containers 30 in some accommodating holes 6121 in the storage mechanism 610 from the picture taken, the picture of the storage mechanism 610 may be taken again, or a focal length of the second information acquisition component 670 may be changed to take a new picture. The controller 400 may further update information recorded in the system about which accommodating holes 6121 in the storage mechanism 610 contain the sample containers 30 and which accommodating holes 6121 do not contain the sample containers 30 based on the analysis results of an algorithm. The information may be used for the controller 400 to control and dispatch the sample container 30, and may also be displayed on a display screen for review by the operator.

In an implementation, the second information acquisition component 670 may be an area array camera or may also be a linear array camera. The second information acquisition component 670 may be a fixed-focus camera or a zoom camera, preferably a zoom area array camera in the implementation.

In an implementation, the sample management apparatus 600 further includes a housing 660. The storage mechanism 610 is horizontally movable relative to the housing 660, that is, the storage mechanism 610 has a drawer-type structure. The housing 660 is mainly used to package internal components of the sample management apparatus 600. The storage mechanism 610 may be set to be opened and closed manually, or may be set to be opened and closed electrically, or may be set to be opened and closed either manually or electrically.

In an implementation, the storage mechanism 610 includes at least one container supporter 611. The container supporter 611 is horizontally movable relative to the housing 660. The container supporter 611 is provided with at least one support position 6111 for placing a bracket 612 capable of supporting multiple sample containers 30. The bracket 612 is provided with multiple accommodating holes 6121 for accommodating the sample containers 30. When the container supporter 611 is in an open position, the operator can take and place the sample container 30 on the container supporter 611. When the container supporter 611 is in a closed position, the operator cannot take or place the sample container 30 on the container supporter 611.

In an implementation, the container supporter 611 is linearly moved between the open position and the closed position by means of a slide guide mechanism. The slide guide mechanism may be a sliding guide mechanism in surface contact or a rolling guide mechanism in line contact.

In an implementation, the storage mechanism 610 further includes a first power assembly 613 installed on a support inside the housing 660. The first power assembly 613 may drive the container supporter 611 to move back and forth in the second horizontal direction Y, so as to move the container supporter 611 between the open position and the closed position. The first power assembly 613 is electrically connected to the controller 400, which can control the storage mechanism 610 to be electrically opened and electrically closed.

In an implementation, the power of the first power assembly 613 may come from a servo motor, a direct-current (DC) motor, a stepper motor, a cylinder or an electric cylinder, preferably a stepper motor herein.

In an implementation, the sample management apparatus 600 may further include a first button 614 arranged corresponding to the storage mechanism 610. The first button 614 is electrically connected to the controller 400, and the controller 400 may monitor a state of the first button 614 and control the first power assembly 613 of the storage mechanism 610 based on the monitor result of the first button 614, so that the storage mechanism 610 may be electrically opened and electrically closed based on an instruction from the operator.

In an implementation, the first button 614 may be controlled as follows. When the storage mechanism 610 is in the closed state, the first button 614 is pressed to open the storage mechanism 610. During the opening of the storage mechanism 610, the first button 614 is pressed, and the storage mechanism 610 stops being opened. When the storage mechanism 610 is in the open state, the first button 614 is pressed, and the storage mechanism 610 is closed. During the closing of the storage mechanism 610, the first button 614 is pressed and the storage mechanism 610 stops being closed. Alternatively, in an alternative implementation, the first button 614 may be controlled as follows. When the first button 614 is pressed for a short time, the controller 400 controls the storage mechanism 610 to be opened. When the first button 614 is pressed for a long time, the controller 400 controls the storage mechanism 610 to be closed. When the first button 614 is pressed during the movement of the storage mechanism 610, the storage mechanism 610 stops moving.

In an implementation, a top of the bracket 612 is provided with multiple accommodating holes 6121, and each accommodating hole 6121 corresponds to a respective hole number 6122.

In an implementation, a bottom of the bracket 612 is provided with a fourth label 6123. The fourth label 6123 may also be arranged on one or more of four sides of the bracket 612 or may be arranged on the top of the bracket 612. An advantage of providing the fourth label 6123 at the bottom of the bracket 612 is that the fourth label 6123 does not need to occupy a top space, thereby making a structure of the bracket 612 more compact. The fourth label 6123 may be a bar code, a two-dimensional code, an RFID label, or any combination thereof, such as a combination of an RFID label and a bar code, preferably an RFID label in the implementation. The fourth label 6123 records information related to the bracket 612, such as number information and the like.

In an implementation, the container supporter 611 includes a handle 6112, a first support 6113 and a second support 6114. The second support 6114 is connected to the housing 660. The first support 6113 slidably installed on the second support 6114, and the handle 6112 is fixedly connected to the first support 6113. A top area of the first support 6113 is divided into multiple support positions 6111, and a respective bracket 612 may be placed on each of the multiple support positions 6111. For example, in an implementation, the first support 6113 is provided with three support positions 6111, that is, the container supporter 611 may accommodate three brackets 612. In a specific application, the number of brackets 612 that may be placed on the first support 6113 is not limited thereto.

In an implementation, a slide guide mechanism is arranged between the first support 6113 and the second support 6114. A fixed end of the slide guide mechanism is connected to the second support 6114, and a sliding end of the slide guide mechanism is connected to the first support 6113. Since the handle 6112 is fixedly connected to the first support 6113, when the handle 6112 is pulled, the first support 6113 may drive the bracket 612 to slide forward in the second horizontal direction Y; and when the handle 6112 is pushed, the first support 6113 may drive the bracket 612 to slide backward in the second horizontal direction Y. The direction in which the first support 6113 drives the bracket 612 to slide forward in the second horizontal direction Y is an opening direction of the container supporter 611, and the direction in which the first support 6113 drives the bracket 612 to slide backward in the second horizontal direction Y is a closing direction of the container supporter 611. When the container supporter 611 is opened, the operator may take away the bracket 612 from the support position 6111 or place the bracket 612 into the support position 6111 of the container supporter 611 to achieve loading or recycling for the sample container 30.

In an implementation, a fourth information acquisition component 615 is further arranged at each support position 6111. When the bracket 612 is placed at the support position 6111, the fourth information acquisition component 615 is located below the fourth label 6123. The fourth information acquisition component 615 is communicatively and/or electrically connected to the controller 400, and the controller 400 may acquire, via the fourth information acquisition component 615, information about the bracket 612 placed at each support position 6111. The fourth information acquisition component 615 may be specifically a label reading device, and a type of the fourth information acquisition component 615 corresponds to a type of the fourth label 6123. For example, if the fourth label 6123 is a bar code, the fourth information acquisition component 615 is a bar code scanner. If the fourth label 6123 is a two-dimensional code, the fourth information acquisition component 615 is a two-dimensional code scanner. If the fourth label 6123 is an RFID label, the fourth information acquisition component 615 is an RFID card reader, preferably an RFID card reader in the implementation.

In an implementation, the sample management apparatus 600 includes multiple storage mechanisms 610, that is, the sample management apparatus 600 includes two or more container supporters 611, and the multiple storage mechanisms 610 are arranged in parallel in the first horizontal direction X. In this way, it is convenient for the operator to take and place the sample container 30 on the same side of the sample management apparatus 600. Each of the multiple storage mechanisms 610 is movable between an open position and a closed position.

In an implementation, functions of the multiple storage mechanisms 610 of the sample management apparatus 600 may be freely set.

In an implementation, at least one container supporter 611 is configured to support a bracket 612 for a sample container 30 containing a to-be-tested sample, and at least one container supporter 611 is configured to support a bracket 612 for a sample container 30 containing a to-be-recycled sample, that is, the bracket 612 in at least one container supporter 611 is classified as a recycle area.

In an implementation, at least one container supporter 611 is configured to support a bracket 612 for a sample container 30 containing an abnormal sample, and the bracket 612 in the at least one container supporter 611 is classified as an abnormal recycle area.

In an implementation, the sample management apparatus 600 includes seven storage mechanisms 610, which can accommodate a total of twenty-one brackets 612, and each of the brackets 612 can store fifty sample containers 30. In a specific application, the number of storage mechanisms 610 in the sample management apparatus 600 is not limited thereto, and may be more than seven or less than seven. For example, in an alternative implementation, the number of sample containers 30 that can be stored by the sample management apparatus 600 may be increased by expanding the number of storage mechanisms 610.

In an implementation, the functions of the multiple storage mechanisms 610 of the sample management apparatus 600 may be freely set. For example, in an implementation, the sample management apparatus 600 includes seven storage mechanisms 610, which are a first storage mechanism 610, a second storage mechanism 610, a third storage mechanism 610, a fourth storage mechanism 610, a fifth storage mechanism 610, a sixth storage mechanism 610 and a seventh storage mechanism 610. The first storage mechanism 610 and the second storage mechanism 610 may be set as a sample loading area (for storing the sample container 30 containing the to-be-processed sample). The third storage mechanism 610, the fourth storage mechanism 610, the fifth storage mechanism 610, the sixth storage mechanism 610 and the seventh storage mechanism 610 may be set as a recycle area (for storing the sample container 30 containing the to-be-recycled sample that has been processed). Alternatively, the first storage mechanism 610 and the second storage mechanism 610 may be set as a sample loading area. The third storage mechanism 610, the fourth storage mechanism 610, the fifth storage mechanism 610 and the sixth storage mechanism 610 may be set as a normal recycle area (for storing a normal sample container 30 containing a to-be-recycled sample that has been processed). The seventh storage mechanism 610 may be set as an abnormal recycle area (for storing an abnormal sample container 30). Further, not only the function of each storage mechanism 610 of the sample management apparatus 600 may be freely set, but also the function of each support position 6111 on each storage mechanism 610 may be freely set. For example, the first storage mechanism 610 and the second storage mechanism 610 are set as a sample loading area, a portion (for example, one or two, etc.) of the multiple support positions 6111 on the first storage mechanism 610 are set as a priority sample loading area (the priority sample loading area is configured to store a bracket 612 loaded with emergency samples, and the sample management apparatus 600 prioritizes the samples in the priority sample loading area), and the remaining support positions 6111 on the first storage mechanism 610 are set as a normal sample loading area.

In an implementation, the storage mechanism 610 may further be configured to store a cleaning liquid container 20 containing a cleaning liquid and/or to store a quality control container containing a quality control sample. The dispatch mechanism 630 is further configured to dispatch a container rack 40 loaded with the cleaning liquid container 20 and a container rack 40 loaded with the quality control container. That is, the container placed at the container position may be a sample container 30, a cleaning liquid container 20 or a quality control container, etc. The container rack 40 may be loaded with the containers having a same type or having two different types at one time. For example, all containers loaded in a same container rack 40 may be the sample containers 30, or may be the cleaning liquid containers 20, or may be the quality control containers. Alternatively, the containers loaded in a same container rack 40 may include at least two types of the sample containers 30, the cleaning liquid containers 20 or the quality control containers. The transfer mechanism 640 is further controlled by the controller 400 to transfer the cleaning liquid container 20 or the quality control container from the storage mechanism 610 into the container rack 40 located on the dispatch mechanism 630. In the implementation, the sample management apparatus 600 is integrated with a cleaning liquid supply apparatus. In a specific application, in an alternative implementation, the sample management apparatus 600 may not be configured to store and dispatch the cleaning liquid container 20, that is, the sample management apparatus 600 and the cleaning liquid supply apparatus may be provided independently of each other.

In an implementation, the multiple storage mechanisms 610 of the sample management apparatus 600 include a cleaning liquid storage area, a sample storage area, and a recycle area, and a specific storage mechanism 610 may be freely set as the cleaning liquid storage area, the sample storage area, or the recycle area. For example, in an implementation, the sample management apparatus 600 includes seven storage mechanisms 610, which are a first storage mechanism 610, a second storage mechanism 610, a third storage mechanism 610, a fourth storage mechanism 610, a fifth storage mechanism 610, a sixth storage mechanism 610 and a seventh storage mechanism 610. The first storage mechanism 610 may be set as the cleaning liquid storage area (for storing the cleaning liquid container 20), the second storage mechanism 610 may be set as the sample storage area and the sample loading area (for storing the sample container 30 containing a to-be-processed sample), and the third storage mechanism 610, the fourth storage mechanism 610, the fifth storage mechanism 610, the sixth storage mechanism 610 and the seventh storage mechanism 610 may be set as the recycle area (for storing the sample container 30 containing a to-be-recycled sample that has been processed).

In an implementation, not only the function of each storage mechanism 610 of the sample management apparatus 600 may be freely set, but also the function of each support position 6111 on each storage mechanism 610 may be freely set. For example, one support position 6111 on the first storage mechanism 610 is set as the storage area for the cleaning liquid container 20, and the other support positions 6111 on the first storage mechanism 610 are set as the sample loading area. The second storage mechanism 610, the third storage mechanism 610, the fourth storage mechanism 610, the fifth storage mechanism 610, the sixth storage mechanism 610 and the seventh storage mechanism 610 are all set as the recycle area.

In an implementation, the cleaning liquid container 20 includes a first container body 21 for containing the cleaning liquid. Since the cleaning liquid does not need to be mixed before being aspirated, the cleaning liquid container 20 may not be provided with a cap body. In a specific application, in an alternative implementation, the cleaning liquid container 20 may also be provided with the cap body and/or a label, that is, the cleaning liquid container 20 includes the first container body 21 and a first cap body covered on the first container body 21. Alternatively, the cleaning liquid container 20 includes the first container body 21 and a third label affixed to an outer surface of the first container body 21. Alternatively, the cleaning liquid container 20 includes a first container body 21, the first cap body covered on the first container body 21 and the third label affixed to the outer surface of the first container body 21.

In an implementation, the container position is a concave hole 41 formed downward from the top of the container rack 40, and the side of the container rack 40 is provided with a slot 42 corresponding to the concave hole 41 and a first label 43. The first label 43 is configured to record information about the container rack 40, such as, the number of the container rack 40 and a type of the container rack 40, etc. The first label 43 may be a bar code, a two-dimensional code, an RFID label, or any combination thereof, such as a combination of the RFID label and the bar code. The concave hole 41 is configured to receive the sample container 30 or the cleaning liquid container 20. The slot 42 allows an information acquisition component (the information acquisition component may be arranged on one of the sample processing apparatus 100, the transport apparatus 300 or the sample management apparatus 600, for example, the third information acquisition component 637) to read a second label 33 affixed to the sample container 30 or a third label affixed to the cleaning liquid container 20, the second label 33 records information about the sample, and the third label records information about the cleaning liquid.

In an implementation, the bottom of the container rack 40 is provided with a concave cavity 44 corresponding to a respective concave hole 41, and the first push component of the first drive component 6312 may be inserted into the concave cavity 44 at the bottom of the container rack 40 to transfer the container rack 40. In a specific application, the manner in which the first push component pushes the container rack 40 to move is not limited thereto.

In an implementation, the transfer mechanism 640 is electrically connected to the controller 400. The transfer mechanism 640 may be controlled by the controller 400 to at least transfer the sample container 30 by: (1) transferring the sample container 30 containing a to-be-processed sample in the bracket 612 at the sample loading area of the storage mechanism 610 into the container rack 40 at the loading position of the loading assembly 631 on the dispatch mechanism 630; (2) transferring the sample container 30 containing the processed sample in the container rack 40 at the recycle position 6304 of the recycle assembly 633 on the dispatch mechanism 630 into the bracket 612 at the recycle area of the storage mechanism 610; (3) transferring the sample container 30 between different brackets 612 on the storage mechanism 610, or transferring the sample container 30 between different accommodating holes 6121 in the same bracket 612 on the storage mechanism 610; (4) transferring the sample container 30 containing the processed sample in the container rack 40 at the recycle position 6304 of the recycle assembly 633 into the container rack 40 at the loading position of the loading assembly 631; and (5) transferring the sample container 30 in other scenarios where the sample container 30 needs to be transferred.

In an implementation, the sample management apparatus 600 is further provided with a first accommodating space 601, a second accommodating space 602 and a guide channel 603. The first accommodating space 601 is configured to accommodate the storage mechanism 610 and the transfer mechanism 640. The second accommodating space 602 is independent of the first accommodating space 601. The transfer mechanism 640 is further controlled by the controller 400 to release the sample container 30 to the guide channel 603 through the first accommodating space 601. The guide channel 603 is configured to communicate the first accommodating space 601 with the second accommodating space 602, to guide the sample container 30 released by the transfer mechanism 640 to the second accommodating space 602. The second accommodating space 602 is independent of the first accommodating space 601, which specifically means that the second accommodating space 602 and the first accommodating space 601 are isolated and disconnected from each other without the guiding of the guide channel 603. The second accommodating space 602 has a function of recycling the sample container 30. In a specific application, the transfer mechanism 640 releases the sample container 30 to the guide channel 603, so as to enable the sample container 30 to be guided to the second accommodating space 602 through the guide channel 603, and the operator can take away the sample container 30 from the second accommodating space 602, thereby achieving a function of throwing the sample container 30 to the second accommodating space 602 for recycling.

In an implementation, the second accommodating space 602 is configured to at least recycle a sample container 30 containing an abnormal sample. The controller 400 is configured to: if it is determined that the target sample container 30 is the sample container 30 containing an abnormal sample based on feedback information from the first information acquisition component 650, control the transfer mechanism 640 to release the target sample container 30 to the guide channel 603. The sample container 30 containing an abnormal sample includes at least one of: a sample container 30 in which a processing item information of the sample cannot be acquired, a sample container 30 in which a sample volume is less than a preset value and a sample container 30 in which a to-be-processed item of the sample is beyond a preset working range.

In an implementation, the second accommodating space 602 allows a recycling operator to input information about a to-be-picked-out sample container 30 into a human-computer interaction apparatus 500. The controller 400 is configured to control the transfer mechanism 640 to release a target sample container 30 to the guide channel 603 when it is determined that a sample container 30 needs to be picked out based on feedback information from the human-computer interaction apparatus 500. The human-computer interaction apparatus 500 is communicatively and/or electrically connected with the controller 400. The human-computer interaction apparatus 500 may be a part of the sample management apparatus 600 or may be independent of the sample management apparatus 600. In the implementation, the operator may input the information (for example, number information, etc.) about the sample container 30 to be searched and picked out into the human-computer interaction apparatus 500, so that a function of one-click searching and picking out of the sample container 30 can be achieved instead of manually opening the storage mechanism 610 for searching, which is time-saving and labor-saving.

In an implementation, the sample management apparatus 600 further includes a receiving mechanism 680 forming the second accommodating space 602 and the receiving mechanism 680 is installed on the housing 660 or integrally formed on the housing 660.

In an implementation, the human-computer interaction apparatus 500 includes a display screen which may be a touch screen. Alternatively, the human-computer interaction apparatus 500 includes a display screen, a mouse, a keyboard and the like. The display screen is connected to the controller 400 for displaying set information, operation information, alarm information and the like of the sample management apparatus 600. The operator may also set the sample management apparatus 600 or send operation instructions to the sample management apparatus 600 through the keyboard, the mouse, the touch screen or a communication interface.

In an implementation, the sample management apparatus 600 further includes an indicating component 620 for indicating an operating state of the sample management apparatus 600, which includes a light indicating component 620 and/or a sound indicating component 620.

An embodiment of the invention further provides a sample processing system 10, which includes a transport apparatus 300, at least one sample processing apparatus 100 and the sample management apparatus 600. The transport apparatus 300 is configured to transport a container rack 40 loaded with a sample container 30 from the sample management apparatus 600 to the sample processing apparatus 100. The sample processing apparatus 100 is configured to aspirate a sample from the sample container 30 in the container rack 40 and process at least a portion of the aspirated sample. In the embodiment, the sample management apparatus 600 is configured to at least load the sample containers 30 and sort and place the sample containers 30 into the container rack 40. The transport apparatus 300 is configured to transport the sample containers 30 that are sorted by the sample management apparatus 600 and loaded into the container rack 40 to a respective sample processing apparatus 100. The sample processing apparatus 100 is configured to aspirate a sample from the sample container 30 transported to a sample aspirating position.

The other parts of the sample management apparatus 600 in the sample processing system 10 may be referred to the above description of the sample management apparatus 600 and will not be described in detail herein.

In an implementation, the sample processing apparatus 100 includes a sample dispensing assembly and a sample processing assembly. The sample dispensing assembly is configured to aspirate a sample from the sample container at a sample aspirating position and dispense at least a portion of the aspirated sample to the sample processing assembly. The sample processing assembly is configured to process the aspirated sample. The sample dispensing assembly includes a sample needle, a movement drive mechanism for driving the sample needle to move, and an aspiration and discharge drive mechanism for driving the sample needle to aspirate and discharge liquid.

In an implementation, at least one sample processing apparatus 100 in the sample processing system 10 is a sample analyzer. The processing performed by the sample processing apparatus 100 on the sample is that the sample analyzer tests parameters of the sample, and the sample analyzer is configured to perform at least one test item on the sample.

In an implementation, the sample processing system 10 includes at least one of: a blood cell analyzer, a specific protein analyzer (the specific protein analyzer is configured to test specific protein parameters such as CRP and/or Serum amyloid A (SAA)), a glycosylated hemoglobin analyzer, a biochemical analyzer, an immune analyzer and a coagulation analyzer. The sample processing assembly of the blood cell analyzer is configured to at least test a blood routine of the sample, and the blood routine test includes at least one of: a white blood cell parameter test, a reticulocyte parameter test, a red blood cell parameter test, a platelet parameter test or a hemoglobin parameter test.

In an implementation, at least one sample processing apparatus 100 in the sample processing system 10 is a smear preparation apparatus. The processing performed by the sample processing apparatus 100 on the sample is that the smear preparation apparatus stains and prepares a smear for the sample. A sample slide prepared by the smear preparation apparatus is mainly used for testing parameters of the sample by a slide reader. In the implementation, the sample processing system 10 may perform a test item on the sample, and may also perform staining and preparation of a smear for the sample. That is, at least one sample processing apparatus 100 in the sample processing system 10 is a sample analyzer, and at least one sample processing apparatus 100 is a smear preparation apparatus. In a specific application, in an alternative implementation, the sample processing system 10 may not be provided with a smear preparation apparatus.

In an implementation, the sample processing system 10 may be a cascaded system or an assembly line system. The cascade system includes a sample management apparatus 600, a front-end track (the front-end track acts as a transport apparatus 300) and at least one sample processing apparatus 100. The assembly line system includes a sample management apparatus 600, a main track and at least two cascaded systems respectively connected to the main track. Alternatively, the assembly line system includes a sample management apparatus 600, a main track, at least one cascaded system connected to the main track, and at least one sample processing apparatus 100 connected to the main track.

In an implementation, the sample processing system 10 includes two or more sample processing apparatuses 100, which may be the same apparatuses or different apparatuses, that is, the two or more sample processing apparatuses 100 may be configured to perform the same sample processing item or perform different sample processing items.

In an implementation, the transport apparatus 300 includes an input track, an output track and a sample aspiration track, which are arranged side by side. The input track is configured to transport the container rack 40, which is transported by the transport track 632 to the input track, to the sample aspiration track. The sample aspiration track is configured to transport the container rack 40, which is transported from the input track, to a liquid aspiration position of each sample processing apparatus 100, and transport the container rack 40 after completing the liquid aspiration (sample aspiration or cleaning liquid aspiration) to the output track. The output track is configured to transport the container rack 40, for which the liquid aspiration is completed, to the transport track 632. In a specific application, in an alternative implementation, at least two of the input track, the output track and the sample aspiration track may be combined into one track.

In an implementation, the controller 400 is arranged in the sample management apparatus 600, that is, the controller 400 is arranged inside the housing 660. In a specific application, in an alternative implementation, the controller 400 may also be arranged outside the sample management apparatus 600, for example, on the outer surface of the housing 660, on the side of the housing 660, on the transport apparatus 300 or on the side of the transport apparatus 300.

In an implementation, the sample processing system 10 further includes multiple on-off controllable power supply components 700 and multiple sub-control units 200. Each power supply component 700 includes at least two power supply channels, which may be switched off or switched on independently. For example, in an implementation, the sample processing system 10 includes a first sample analyzer, a second sample analyzer, a smear preparation apparatus, a first power supply component 700, a second power supply component 700, a third power supply component 700, a first sub-control unit 200, a second sub-control unit 200, and a third sub-control unit 200. The transport apparatus 300 includes a first transport unit extending to the first sample analyzer, a second transport unit extending to the second sample analyzer, and a third transport unit extending to the smear preparation apparatus. One power supply channel of the first power supply component 700 supplies power to the first sample analyzer, and the other power supply channel supplies power to the first transport unit. One power supply channel of the second power supply component 700 supplies power to the second sample analyzer, and the other power supply channel supplies power to the second transport unit. One power supply channel of the third power supply component 700 supplies power to the smear preparation apparatus and the other power supply channel supplies power to the third transport unit. The first sub-control unit 200 is electrically connected to the first power supply component 700 for controlling the first power supply component 700, i.e. controlling the switching off or switching on of each power supply channel of the first power supply component 700. The second sub-control unit 200 is electrically connected to the second power supply component 700 for controlling the second power supply component 700, i.e. controlling the switching off or switching on of each power supply channel of the second power supply component 700. The third sub-control unit 200 is electrically connected to the third power supply component 700 for controlling the third power supply component 700, i.e. controlling the switching off or switching on of each power supply channel of the third power supply component 700. The controller 400 is connected communicatively to each sub-control unit 200 (the first sub-control unit 200, the second sub-control unit 200, and the third sub-control unit 200), and may indirectly control each power supply component 700.

In a specific application, an electronic control manner for each of the sample processing apparatuses 100 and the transport units is not limited to the above implementation. For example, in an alternative implementation, the sample processing system 10 may not be provided with a sub-control unit 200, and each power supply component 700 may be directly controlled by the controller 400. Alternatively, in another alternative implementation, the sub-control unit 200 and the power supply component 700 may be combined into one power supply component 700 (in the above implementation, the control unit and the power supply component 700 are two separate components) that may be remotely controlled, either by communication control or by level control. Alternatively, in yet another alternative implementation, the sample processing system 10 may be provided with a multi-channel power supply component 700, from which all the sample processing apparatuses 100 and all the transport units are powered (each sample processing apparatus 100 is provided with a respective power supply component 700). In the alternative implementation, the power supply for each sample processing apparatus 100 and for each transport unit may be independently controlled to be on/off, or the power supply for all the sample processing apparatuses 100 and the transport units may be synchronously controlled.

In an implementation, the working principle of the sample processing system 10 is introduced as follows.
(1) The process of supplying an unloaded container rack 40 from the buffer assembly 634 to the loading position of the loading assembly 631 includes the following operations.

At operation S101, it is determined whether an unloaded container rack 40 is required at the loading position of the loading assembly 631; if so, the process proceeds to the operation S102; if not, the process ends directly. The condition for determining whether the unloaded container rack 40 is required at the loading position of the loading assembly 631 may be that there is no container rack 40 or insufficient container rack 40 at the loading position of the loading assembly 631.

At operation S102, the fourth drive component 6342 of the buffer assembly 634 pushes the unloaded container rack 40 stored on the buffer support platform 6341 in the second horizontal direction Y (backward), and pushes the first unloaded container rack 40 to the transfer position 6305. A sensor at the transfer position 6305 may detect whether the container rack 40 is pushed to the transfer position 6305.

At operation S103, the fourth drive component 6342 of the buffer assembly 634 moves in the first horizontal direction X (to the left) to push the container rack 40 to the reception position of the recycle support platform 6331. A sensor at the reception position may detect whether the container rack 40 is pushed the reception position.

At operation S104, the second drive component 6332 of the recycle assembly 633 pushes the unloaded container rack 40 in the second horizontal direction Y (backward), and pushes the unloaded container rack 40 to the recycle position 6304. A sensor at the recycle position 6304 may detect whether the container rack 40 is pushed to the recycle position 6304.

At operation S105, it is determined whether there is a container rack 40 at the first loading position 6301 of the loading assembly 631; if so, the process proceeds to the operation S106; if not, the process proceeds to the operation S107. The first loading position 6301 of the loading assembly 631 is the loading position or a portion of the loading positions on the dispatch mechanism 630 for the first container rack 40.

At operation S106, the first drive component 6312 of the loading assembly 631 pushes the container rack 40 at the first loading position 6301 in the second horizontal direction Y (forward), and pushes the container rack 40 away from the first loading position 6301 to the second loading position 6302. A sensor at the first loading position 6301 may detect whether the container rack 40 is pushed away from the first loading position 6301.

At operation S107, the third drive component 6333 of the recycle assembly 633 moves in the first horizontal direction X (to the left) to push the unloaded container rack 40 to the first loading position 6301 of the loading support platform 6311. The sensor at the first loading position 6301 may detect whether the container rack 40 is pushed to the first loading position 6301, and if so, the transfer of the unloaded container rack 40 is completed.
(2) The process of outputting the container rack 40 by the sample management apparatus 600 (the outputting of the container rack 40 loaded with the sample container 30 is taken as an example, and the process of outputting the container rack 40 loaded with the sample container 30 is similar to that of outputting the container rack 40 loaded with the cleaning liquid container 20) includes the following operations.

At operation S201, the container rack 40 at the loading position (including the first loading position 6301 and/or the second loading position 6302) waits for the transfer mechanism 640 to complete a loading operation of the sample container 30.

At operation S202, it is determined whether the container rack 40 at the loading position completes the loading of the sample container 30; if so, the process proceeds to the operation S203; if not, the process continues waiting at the operation S202 until the container rack 40 completes the loading of the sample container 30.

At operation S203, the first drive component 6312 of the loading assembly 631 pushes the container rack 40 to the first buffer area of the loading support platform 6311 in the second horizontal direction Y (forward). The first buffer area is a position in which the container rack 40 to be delivered by the dispatch mechanism 630 is buffered, and the first buffer area may buffer one or more container racks 40.

At operation S204, the controller 400 determines whether the sample analysis system requires the sample management apparatus 600 to output the container rack 40, and the condition for the determination may include at least one of: the sample analyzer is in an idle state, the smear preparation apparatus is in an idle state, the sample analyzer requests or permits the supply of the container rack 40, or the smear preparation apparatus requests or permits the supply of the container rack 40. If so, the process proceeds to the operation S205; if not, the process continues waiting at the operation S204 until the sample analysis system requires the sample management apparatus 600 to output the container rack 40.

At operation S205, the first drive component 6312 of the loading assembly 631 pushes the container rack 40 from the first buffer area to the first workstation 6321 of the transport track 632. A sensor at the first workstation 6321 is configured to detect whether the container rack 40 is pushed to the first workstation 6321.

At operation S206, a conveyor belt of the transport track 632 transports the container rack 40 at the first workstation 6321 in the first horizontal direction X, so that the label of the container rack 40 is located in a reading range of the third information acquisition component 637 (herein, a label reading device). The controller 400 communicates with the label reading device, and obtains and records the information about the container rack 40 to be output through the third information acquisition component 637. If the label of the container rack 40 includes an RFID label, the label reading device may be an RFID reader.

At operation S207, the conveyor belt of the transport track 632 continues transporting the container rack 40 in the first horizontal direction X, and outputs the container rack 40 to the transport apparatus 300, which transports the container rack 40 to the sample analyzer and/or the smear preparation apparatus.

The operations S203, S204 and S206 are not essential operations and may be deleted.
(3) The process of recycling the processed container by the sample management apparatus 600 (the recycle of the sample container 30 is taken as an example, and the recycle of the cleaning liquid container 20 is similar to that of the sample container 30) includes the following operations.

At operation S301, the transport track 632 of the sample management apparatus 600 receives the processed container rack 40 (the container rack 40 that has completed the sample aspiration) returned from the transport apparatus 300.

At operation S302, the sixth drive component 635 beside the transport track 632 moves in the second horizontal direction Y, so that the first blocking member 6351 of the sixth drive component 635 extends into the transport track 632.

At operation S303, the conveyor belt of the transport track 632 transports the processed container rack 40 in the first horizontal direction X (to the right), the container rack 40 is blocked by the first blocking member 6351 of the sixth drive component 635 and reaches the second workstation 6322 in the transport track 632. A sensor at the second workstation 6322 detects whether the container rack 40 reaches the second workstation 6322.

At operation S304, the sixth drive component 635 continues moving in the second horizontal direction Y to push the processed container rack 40 into the recycle support platform 6331 of the recycle assembly 633. A sensor at an inlet of the recycle support platform 6331 detects whether the container rack 40 is pushed into the recycle support platform 6331.

At operation S305, the second drive component 6332 of the recycle assembly 633 pushes the processed container rack 40 into a second buffer area of the recycle support platform 6331. The second buffer area is a buffer position on the recycle support platform 6331 for buffering the processed container rack 40.

At operation S306, it is determined whether the processed container rack 40 at the second buffer area can be recycled; if so, the process proceeds to the operation S307; if not, the process continues waiting at the operation S306 until the processed container rack 40 in the second buffer area can be recycled. The condition for determining whether the processed container rack 40 at the second buffer area can be recycled includes one or more of the following conditions.
(3.1) When the samples in a loading area defined by the sample storage mechanism 610 have been processed, the transfer mechanism 640 no longer needs to load the sample container containing the to-be-processed sample, and the transfer mechanism 640 may turn to recycling the sample container 30 containing the processed sample.
(3.2) When the number of to-be-processed container racks 40 at the first buffer area on the loading support platform 6311 reaches a certain number, and the to-be-processed container racks 40 at the first buffer area is sufficient to meet the processing requirements of the sample analyzer and the smear preparation apparatus for a period of time. At this time, the transfer mechanism 640 suspends loading the sample container containing the to-be-processed sample and prioritizes the recycle of the sample container containing the processed sample.
(3.3) When the number of processed container racks 40 at the second buffer area on the recycle support platform 6331 reaches a certain number or the second buffer area is about to be filled with the container racks 40, the transfer mechanism 640 suspends loading the sample container containing the to-be-processed sample and prioritizes the recycle of the sample container containing the processed sample.
(3.4) The transfer mechanism 640 has loaded the sample container containing the to-be-processed sample for a period of time T1 and turns to recycling the sample container 30 containing the processed sample for a period of time T2, so that the time T1 for loading the sample container 30 containing the to-be-processed sample alternates with the time T2 for recycling the sample container 30 containing the processed sample, and the loading of the sample container 30 containing the to-be-processed sample and the recycling of the sample container 30 containing the processed sample are balanced. T1 and T2 may be the same or different.
(3.5) The transfer mechanism 640 has loaded N1 sample containers containing the to-be-processed samples and turns to recycling N2 sample containers 30 containing the processed samples, so that the loading of N1 sample containers 30 containing the to-be-processed samples alternates with the recycling of N2 sample containers 30 containing the processed samples, and the loading of the sample container 30 containing the to-be-processed sample and the recycling of the sample container 30 containing the processed sample are balanced. N1 and N2 may be the same or different.
(3.6) Other conditions, for example, there is an no-reagent alarm in the sample analyzer or the smear preparation apparatus in the sample processing system 10; a speed requirement for the transfer mechanism 640 to output the to-be-processed container rack 40 decreases, and the like.

At operation S307, the second drive component 6332 of the recycle assembly 633 pushes a processed container rack 40 temporarily stored at the second buffer area to the recycle position 6304 in the second horizontal direction Y. When the recycle position 6304 can accommodate multiple container racks 40, the second drive component 6332 may push multiple processed container racks 40 temporarily stored at the second buffer area to the recycle position 6304.

At operation S308, the transfer mechanism 640 transfers all the processed sample containers 30 on the container rack 40 at the recycle position 6304 into the recycle area or the abnormal area defined by the storage mechanism 610 one by one; or the transfer mechanism 640 classifies and transfers all the processed sample containers 30 on the container rack 40 at the recycle position 6304 into the recycle area or the abnormal area defined by the storage mechanism 610.

At operation S309, it is determined whether the processed sample containers 30 on the container rack 40 at the recycle position 6304 have been transferred; if so, the process proceeds to the operation S310; if not, the process continues waiting at the operation S309 until the sample containers 30 on the container rack 40 are transferred.

At operation S310, it is determined whether a loading position has not yet stored the container rack 40 (for example, one of the first loading position 6301 and the second loading position 6302 does not have the container rack 40); if so, the process proceeds to the operation S311; if not, the process continues waiting at the operation S310.

At operation S311, it is determined whether the first loading position 6301 has a container rack 40; if so, the process proceeds to the operation S312; if not, the process proceeds to the operation S313.

At operation S312, the first drive component 6312 pushes the container rack 40 at the first loading position 6301 away from the first loading position 6301 in the second horizontal direction Y (forward).

At operation S313, the third drive component 6333 moves in the first horizontal direction X (to the left) to push the unloaded container rack 40 to the first loading position 6301.
(4) The unloaded container rack 40 that enters the loading support platform 6311 from the recycle position 6304 of the recycle support platform 6331 may continue to be used as the container rack 40 for loading the sample container. If there is no sample container to be loaded or the sample management apparatus 600 needs to be shut down, the unloaded container rack 40 on the loading support platform 6311 is transported back to the buffer support platform 6341. The specific process includes the following operations.

At operation S401, the first drive component 6312 of the loading assembly 631 pushes the unloaded container rack 40 to the first workstation 6321 of the transport track 632 in the second horizontal direction Y. A sensor at the first workstation 6321 is configured to detect whether the container rack 40 reaches the first workstation 6321.

At operation S402, the seventh drive component 636 beside the transport track 632 moves in the second horizontal direction Y, so that the second blocking member 6361 of the seventh drive component 636 extends into the transport track 632.

The above operations S401 and S402 are not sequential and may be performed in series or in parallel. If the operations are performed in serial, the operation S401 may be followed by the operation S402, or the operation S402 may also be followed by the operation S401.

At operation S403, the conveyor belt of the transport track 632 transports the unloaded container rack 40 in the first horizontal direction X (to the right), the container rack 40 is blocked by the second blocking member 6361 of the seventh drive component 636 and reaches the third workstation 6323. A sensor at the third workstation 6323 is configured to detect whether the container rack 40 reaches the third workstation 6323.

At operation S404, the seventh drive component 636 continues moving in the second horizontal direction Y to push the unloaded container rack 40 into the buffer support platform 6341. A sensor at an inlet of the buffer support platform 6341 is configured to detect whether the container rack 40 is pushed into the buffer support platform 6341.

The supply of the unloaded container rack 40 by the dispatch mechanism 630 has been achieved by the above operations S101 to S107. The output of the to-be-processed container rack 40 by the sample management apparatus 600 has been achieved by the above operations S201 to S207. The recycle of the sample container 30 containing the processed sample by the sample management apparatus 600 has been achieved by the above operations S301 to S313. The recycle of the unloaded container rack 40 in the sample management apparatus 600 has been achieved by the above operations S401 to S404.

The above operations S101 to S107, S201 to S207, S301 to S313 and S401 to S404 constitute a whole cycle of the sample management apparatus 600 from the supply of the container rack 40 to the recycle of the container rack 40, the dispatch of the container rack 40 in the cycle is automatically completed, and the operator does not need to operate the container rack 40.
(5) The process of determining a storage state of the sample container 30 in the storage mechanism 610 by the controller 400 based on information from the second information acquisition component 670 includes the following operations.

At operation S501, it is determined whether the sample management apparatus 600 has just been started up; if so, the process proceeds to the operation S503; if not, it indicates that the starting up of the sample management apparatus 600 has been completed and the process proceeds to the operation S502.

At operation S502, it is determined whether the storage mechanism 610 has just been closed after being opened. The storage mechanism 610 has been opened and closed, which indicates that the operator may have operated the bracket 612 on the storage mechanism 610 or the sample container 30 on the bracket 612, and thus it is necessary to re-identify the sample container 30 stored in the storage mechanism 610. If so, the process proceeds to the operation S503; if not, the process of determining the storage state of the sample container 30 in the storage mechanism 610 is ended directly.

When the storage mechanism 610 is not opened, the operator cannot operate the bracket 612 placed thereon or the sample container 30 on the bracket 612. Therefore, it is not necessary to re-identify the sample container 30 stored in the storage mechanism 610.

At operation S503, when the transfer mechanism 640 is loading the sample container 30 (transferring the sample container 30 into the container rack 40) or recycling the sample container 30 (transferring the sample container 30 at the container rack 40 into the storage mechanism 610), the loading and recycling by the transfer mechanism 640 are suspended.

At operation S504, the transfer mechanism 640 drives the second information acquisition component 670 to move above the stored bracket 612.

At operation S505, an illumination component is turned on to provide illumination for a shooting of the second information acquisition component 670.

At operation S506, the second information acquisition component 670 takes a picture or video, preferably a picture of the bracket 612 downwards. A still shooting mode (for example, using an area array camera) or a moving shooting mode (for example, using a linear array camera) may be used. Considering that the storage mechanism 610 is relatively long and a field of view of the second information acquisition component 670 may be limited, multiple pictures may be taken, for example, taking two pictures of each bracket 612. After taking a set of pictures of a bracket 612, the transfer mechanism 640 drives the second information acquisition component 670 to move above another bracket 612 of the storage mechanism 610, and continue taking a next set of pictures until pictures of all the brackets 612 on the storage mechanism 610 have been taken.

At operation S507, after the pictures of all the brackets 612 on the storage mechanism 610 have been taken, the illumination component is turned off, which can avoid the illumination component being opened all the time, and thus the life of the illumination component can be prolonged.

At operation S508, the controller 400 analyzes which accommodating holes 6121 of which brackets 612 hold the sample containers 30 based on the pictures taken of the brackets 612. The controller 400 may compare the picture taken of the bracket 612 with a background picture of the bracket 612 in which the sample container 30 is not placed and calculate, to obtain the result as to which accommodating holes 6121 of the bracket 612 hold the sample containers 30.

If it is not possible to determine whether a certain accommodating hole 6121 or some of the accommodating holes 6121 of the bracket 612 hold the sample containers 30 based on the pictures taken, the operations S504 to S507 may be repeated to take pictures of the bracket 612 again, or a focal length of the second information acquisition component 670 may be changed to retake.

At operation S509, information about which accommodating holes 6121 of the bracket 612 hold the sample container 30 and which accommodating holes 6121 of the bracket 612 do not hold the sample container 30 recorded in the system are updated based on the analysis result of the controller 400. The information may be used to assist the controller 400 in controlling the transfer mechanism 640 to transfer the sample container 30, and may also be displayed on a display screen for review by the operator.

At operation S510, if the transfer mechanism 640 has been controlled by the controller 400 to suspend the loading and recycling when the storage mechanism 610 is opened, when the storage mechanism 610 is closed, the controller 400 controls the transfer mechanism 640 to resume the loading and recycling of the sample container 30.

When multiple storage mechanisms 610 are closed, the controller 400 may control the second information acquisition component 670 to sequentially take pictures for each of the multiple storage mechanisms 610 based on a processing priority set in the sample management apparatus 600 in advance. Alternatively, each of the multiple storage mechanisms 610 is photographed in sequence based on an order in which the storage mechanisms 610 are closed.

(6) The loading process of controlling the transfer mechanism 640 to transfer the sample container 30 to the container rack 40 by the controller 400 includes the following operations.

At operation S601, before the transfer mechanism 640 is controlled to transfer the sample container 30 to the container rack 40, it is determined whether there is a suitable number of container racks 40 at the loading position (the implementation includes the first loading position 6301 and the second loading position 6302) of the loading assembly 631; if so, the process proceeds to the operation S603; if not, the process proceeds to the operation S602. When the container rack 40 at the loading position is full or no matching (without the same classification attribute) sample containers 30 are inserted into the container rack 40 continuously, the container rack 40 at the loading position should be transferred into the first buffer area of the loading assembly 631 timely, and the number of remaining container racks 40 at the loading position recorded in the system should be updated timely. The determination condition of the above-mentioned "suitable number" may be that the loading position is fully filled with the container racks 40, or that the loading position is not fully filled with the container racks 40 but the number of the container racks 40 and the number of unloaded accommodating holes 6121 in the container racks 40 is sufficient for insertion of the sample container 30.

At operation S602, when there is not a sufficient number of container racks 40 at the loading position of the loading assembly 631, an unloaded container rack 40 is timely dispatched to the loading position. The unloaded container rack 40 may come from the buffer assembly 634 (refer to the operations S101 to S107), or may come from the recycle assembly 633, which has completed the recycling of the sample container 30 (refer to the operations S301 to S313).

At operation S603, it is determined whether the sample management apparatus 600 is provided with a priority sample loading area; if so, the process proceeds to the operation S604; if not, the process proceeds to the operation S607. Based on the above description, multiple storage mechanisms 610 of the sample management apparatus 600 may be freely defined as a sample loading area or a recycle area, and the sample loading area may be further set as a priority sample loading area and a normal sample loading area.

At operation S604, if the sample management apparatus 600 is provided with a priority sample loading area, it is determined whether the sample container 30 is stored in the bracket 612 of the priority sample loading area; if so, the process proceeds to the operation S605; if not, the process proceeds to the operation S606. The second information acquisition component 670 is used to determine whether the sample container 30 is stored in the bracket 612 of the priority sample loading area, as detailed in the operations S501 to S510.

At operation S605, the transfer mechanism 640 translates to a position above the accommodating hole 6121, loaded with the sample container 30, in the bracket 612 at the priority sample loading area.

At operation S606, if there is no sample container 30 at the priority sample loading area set by the sample management apparatus 600, it is determined whether there is a sample container 30 in a normal sample loading area set by the sample management apparatus 600; if so, the process proceeds to the operation S607; if not, it indicates that there is no sample container 30 in the sample loading area or all the sample containers 30 in the sample loading area have been processed, and the loading process is directly ended.

At operation S607, the transfer mechanism 640 translates to a position above the accommodating hole 6121, loaded with the sample container 30, in the bracket 612 at the normal sample loading area.

At operation S608, the transfer mechanism 640 transfers the sample container 30 containing a to-be-processed sample, to achieve loading of the sample container 30. During the transfer, the first information acquisition component 650 identifies the sample container 30, thereby achieving the sorting of the sample container 30.
(7) The process of transferring the sample container 30 containing a to-be-processed the sample by the transfer mechanism 640 to achieve the loading of the sample container 30 includes the following operations.

At operation S701, the lifting component 6424 of the transfer mechanism 640 moves downward to a clamping position of the bracket 612 in the vertical direction Z. The first clamping jaw 641 of the transfer mechanism 640 can clamp the container body of the sample container 30 at the clamping position of the bracket 612, and a bottom of the first clamping jaw 641 does not touch a top surface of the bracket 612.

At operation S702, the first clamping jaw 641 of the transfer mechanism 640 clamps the sample container 30.

At operation S703, the lifting component 6424 of the transfer mechanism 640 moves upward to an upper position in the vertical direction Z.

At operation S704: four sub-operations are completed as follows.

At sub-operation S7041, the first information acquisition component 650 captures the sample container 30 clamped by the first clamping jaw 641, either by taking a picture or by taking a video, preferably taking a picture in the implementation. The captured information includes a cap body, a tube body, label information of the sample container 30, a liquid level height of the sample in the sample container 30, and the like.

At sub-operation S7042, the transfer mechanism 640 translates to a position above the loading position of the loading assembly 631.

At sub-operation S7043, the controller 400 identifies the type of the sample container 30 clamped by the first clamping jaw 641 by analyzing the information captured by the first information acquisition component 650 (for example, analyzing the shape of the cap body, the bottom shape of the container body, the color of the cap body, the position of the sample, the liquid level height of the sample, the label information, etc.), so as to distinguish the clamped sample container 30 into the first type of sample container 301 and the second type of sample container 302, and identify an approximate sample volume in the sample container 30.

At sub-operation S7044, the first information acquisition component 650 acquires the sample number information in the label information of the sample container 30 clamped by the first clamping jaw 641, or the controller 400 acquires the sample number information in the label information of the sample container 30 by analysis.

In the above four sub-operations, the sub-operation S7042 may be performed in parallel with the other three sub-operations, or may be performed in series, preferably performed in parallel in the implementation. That is, when translating the transfer mechanism 640, the shooting, algorithm analysis and sample number identification of the sample container 30 are completed, which may shorten the time and improve the speed of the loading of the sample container 30.

In an alternative implementation, the sub- operation S7041 may be completed first, and then the sub-operation S7042 may be performed in parallel with the sub- operations S7043 and S7044, which may prevent the first information acquisition component 650 from shaking during the translating of the transfer mechanism 640, resulting in an unclear shooting.

At operation S705, it is determined whether the sample number of the sample container 30 clamped by the first clamping jaw 641 is identified; if so, the process proceeds to the operation S708; if not, it indicates that the sample number cannot be identified, and a to-be-processed item of the sample cannot be obtained. The reason for this problem may be that a label is not affixed to the sample container 30, or a portion of the label representing the sample number information is defaced. For this type of sample container 30, the following two methods may be adopted.

In the first method, the sample in the sample container 30 is processed in a default processing mode (for example, one certain sample processing item or two certain sample processing items are processed by default), or the sample in the sample container 30 is processed in a full mode (i.e., the sample container 30 is transported to each sample processing apparatus 100 for aspirating sample).

In the second method, the sample container 30 is treated as a sample container containing an abnormal sample, which is determined by the operator.

The second method described above is preferably in the implementation, and the process proceeds to the operation S706.

At operation S706, the transfer mechanism 640 inserts the sample container 30 into the abnormal area defined by the controller 400, and if no abnormal area is defined in the system, the sample container 30 is returned to the original position of the bracket 612 at the sample loading area, and marked as a sample container 30 containing an abnormal sample.

At operation S707, the information on the sample container 30 at the abnormal area is updated, and a number of the bracket 612 at the abnormal area and a number of the hole 6122 in which the sample container 30 is placed are recorded. The information can be displayed on a display screen for review by the operator.

At operation S708, it is determined whether the sample volume in the sample container 30 (identified in the sub-operation S7043 of the operation S704) is sufficient; if so, the process proceeds to the operation S709; if not, it indicates that the sample volume in the sample container 30 is insufficient for the to-be-processed item, and the process proceeds to the operation S706 to treat the sample container 30 as a sample container 30 containing an abnormal sample.

At operation S709, a to-be-processed item of the sample is inquired based on the sample number information identified in the operation S704, and then it is determined whether the classification attribute of the sample container 30 clamped by the first clamping jaw 641 matches the classification attribute of the container rack 40 at the loading position based on the to-be-processed item in combination with the type information of the sample container 30 identified in the operation S704; if so, the process proceeds to the operation S711; if not, the process proceeds to the operation S710.

It is determined that the classification attribute of the sample container 30 matches the classification attribute of the container rack 40 at the loading position when one of the following conditions is satisfied.
(7.1) A type and a to-be-processed item of the sample container 30 clamped by the first clamping jaw 641 are same as those of the sample container 30 loaded in the container rack 40 at the loading position. For example, the sample container 30 clamped by the first clamping jaw 641 and the sample container 30 loaded in the container rack 40 at the loading position are both the first type of sample containers 301, and the to-be-processed items are both blood routine test items.
(7.2) The type and/or the to-be-processed item of the sample container 30 clamped by the first clamping jaw 641 is different from those of the sample container 30 loaded in the container rack 40 at the loading position, but they may be tested in a same sample processing apparatus 100.

For example, both the sample container 30 clamped by the first clamping jaw 641 and the sample container 30 loaded in the container rack 40 at the loading position are the first type of sample containers 301, the to-be-processed item of the sample container 30 clamped by the first clamping jaw 641 is a CRP test item, and the to-be-processed item of the sample container 30 loaded in the container rack 40 at the loading position is a blood routine test item. When a certain sample analyzer can support both the blood routine test item and the CRP test item, the sample container 30 clamped by the first clamping jaw 641 is determined to be matched with the container rack 40 at the loading position.

For another example, the sample container 30 clamped by the first clamping jaw 641 is the second type of sample container 302, the sample container 30 loaded in the container rack 40 at the loading position is the first type of sample container 301, and the to-be-processed items of the sample container 30 clamped by the first clamping jaw 641 and the sample container 30 loaded in the container rack 40 at the loading position are both blood routine test items. When a certain sample analyzer can support the sample aspiration for both the first type of sample container 301 and the second type of sample container 302, the sample container 30 clamped by the first clamping jaw 641 is determined to be matched with the container rack 40 at the loading position.
(7.3) The container rack 40 at the loading position is an unloaded container rack 40, and no sample container 30 has been loaded yet, which is a container rack 40 with no defined classification attribute. When a first sample container 30 to be processed is inserted into the unloaded container rack 40, the container rack 40 has a classification attribute.

It should be noted that, in the following cases, it should be determined that the sample container 30 clamped by the first clamping jaw 641 does not match the container rack 40 at the loading position.
(7.4) After the sample container 30 clamped by the first clamping jaw 641 is inserted into the container rack 40, the processing of the original sample container 30 in the container rack 40, which can be accomplished on m sample processing apparatuses 100, becomes to be accomplished on m+1 sample processing apparatuses 100, where m may be equal to 1. For example, the to-be-processed item of the original sample container 30 on the container rack 40 is a blood routine test item, and the to-be-processed item of the sample container 30 clamped by the first clamping jaw 641 is a CRP test item. The first sample analyzer only supports the blood routine test item, and the second sample analyzer only supports the CRP test item. Originally, the container rack 40 only needs to be transported to the first sample analyzer to complete the processing of all the samples on the container rack 40. If the sample container 30 clamped by the first clamping jaw 641 is inserted into the container rack 40, the container rack 40 needs to be transported to the first sample analyzer and the second sample analyzer respectively to complete the processing of all the samples on the container rack 40. At this time, it is determined that the sample container 30 clamped by the first clamping jaw 641 does not match the container rack 40 at the loading position.
(7.5) When there are multiple container racks 40 to be loaded at the loading position (when the container rack 40 at the loading position has been filled with the sample containers 30, the state of the container rack 40 is no longer the container rack 40 to be loaded, but changes to the container rack 40 that has been loaded), the controller 400 should consult all the container racks 40 at the loading position, and the controller 400 determines that the sample container 30 clamped by the first clamping jaw 641 matches the container rack 40 at the loading position when the sample container 30 clamped by the first clamping jaw 641 matches one of the multiple container racks 40 to be loaded at the loading position. The controller 400 determines that the sample container 30 clamped by the first clamping jaw 641 does not match the container rack 40 at the loading position when the sample container 30 clamped by the first clamping jaw 641 does not match any of the multiple container racks 40 to be loaded at the loading position.

At operation S710, the transfer mechanism 640 places the sample container 30 that does not match the container rack 40 at the loading position back into the storage mechanism 610 at the sample loading area, either back into the original position or back into an empty accommodating hole 6121 of the bracket 612, closest to the loading position, at the sample loading area.

At operation S711, the transfer mechanism 640 translates to a position above an empty accommodating position of the matched container rack 40 to be loaded.

At operation S712, the lifting component 6424 of the transfer mechanism 640 moves downward to the clamping position of the container rack 40 in the vertical direction Z, to insert the sample container 30 into the accommodating position of the container rack 40. The first clamping jaw 641 of the transfer mechanism 640 can clamp the container body of the sample container 30 at the clamping position of the container rack 40, and the bottom of the first clamping jaw 641 does not touch the top surface of the container rack 40.

At operation S713, the first clamping jaw 641 of the transfer mechanism 640 releases the sample container 30.

At operation S714, the lifting component 6424 of the transfer mechanism 640 moves upward to the upper position in the vertical direction Z.

At operation S715, information on the container rack 40 in which the currently loaded sample container 30 is located is updated, for example, information on the accommodating position, that the currently loaded sample container 30 was inserted into, of the container rack 40, and the remaining empty accommodating position of the container rack 40.

At operation S716, information on the remaining sample containers 30 to be loaded at the sample loading area is updated. If the current sample container 30 has been loaded, position information of this sample container 30 is deleted from the sample loading area. If the current sample container 30 is placed back into the original position, the position information of this sample container 30 at the sample loading area is retained. If the current sample container 30 is inserted into another bracket 612 at the sample loading area or into another accommodating hole 6121 of the original bracket 612, the position information of this sample container 30 at the sample loading area is updated.

The operations S701 to S716 are repeated until the loading of all the sample containers 30 to be processed at the sample loading area is completed.

It should be noted that the operations S705 to S708 can be removed from the operations S701 to S716. However, after the operations S705 to S708 are removed, the sample management apparatus 600 cannot identify and process the sample container 30 containing an abnormal sample.
(8) The process of transferring the to-be-recycled sample container 30 containing a processed sample by the transfer mechanism 640 includes the following operations.

At operation S 801, it is determined whether the container rack 40 at the recycle position 6304 of the recycle assembly 633 is ready; if so, the process proceeds to the operation S802; if not, the process continues waiting at the operation S801 until the container rack 40 at the recycle position 6304 is ready.

At operation S802, the transfer mechanism 640 translates to a position above a container position loaded with the sample container 30 in the container rack 40 at the recycle position 6304.

At operation S803, the lifting component 6424 of the transfer mechanism 640 moves downward to the clamping position of the container rack 40 in the vertical direction Z. The first clamping jaw 641 of the transfer mechanism 640 can clamp the container body of the sample container 30 at the clamping position of the container rack 40, and the bottom of the first clamping jaw 641 does not touch the top surface of the container rack 40.

At operation S804, the first clamping jaw 641 of the transfer mechanism 640 clamps the sample container 30.

At operation S805, the lifting component 6424 of the transfer mechanism 640 moves upward to the upper position in the vertical direction Z.

At operation S806, the controller 400 determined whether a test result of the sample in currently recycled sample container 30 is abnormal; if so, the process proceeds to the operation S807; if not, the process proceeds to the operation S808. The abnormal test result of sample includes, but is not limited to, no test result for the sample or the result being beyond a preset range.

At operation S807, it is determined whether an abnormal area is set in the storage mechanism 610; if so, the process proceeds to the operation S809; if not, the process proceeds to the operation S808.

At operation S808, the transfer mechanism 640 translates to a position above an empty accommodating hole 6121 of the bracket 612 at the recycle area.

At operation S809, the transfer mechanism 640 translates to a position above an empty accommodating hole 6121 of the bracket 612 at the abnormal area.

At operation S810, the lifting component 6424 of the transfer mechanism 640 moves downward to the clamping position of the bracket 612 in the vertical direction Z, and the sample container 30 is inserted into the accommodating hole 6121 of the bracket 612.

At operation S811, the first clamping jaw 641 of the transfer mechanism 640 released the sample container 30.

At operation S812, the lifting component 6424 of the transfer mechanism 640 moves upward to the upper position in the vertical direction Z.

At operation S813, after the recycled sample container 30 is inserted into the bracket 612 at the recycle area or the abnormal area, the information on the sample container 30 stored in the recycle area or the abnormal area is updated, and a number of the bracket 612 containing the sample container 30 at the recycle area or the abnormal area and a number of the hole 6122 in which the sample container 30 is placed are recorded.

The above are only preferred embodiments of the invention, and are not intended to limit the scope of protection of the invention. Any equivalent structural transformation made by using the description and drawings of the invention, or direct/indirect application in other related technical fields under the inventive concept of the invention, shall fall within the scope of protection of the invention.

### EXAMPLES

1. A sample management apparatus, characterized in that the sample management apparatus comprises:
a storage mechanism, configured to at least store a sample container containing a sample;
a dispatch mechanism, arranged below or above the storage mechanism in a height direction of the sample management apparatus and comprising a loading support platform and a first drive component, wherein the loading support platform is provided with a loading position for supporting a container rack with at least two container positions for receiving the sample containers transferred by a transfer mechanism; and the first drive component is configured to drive the container rack at the loading position to move away from the loading position; and
the transfer mechanism, configured to at least transfer a sample container containing a sample from the storage mechanism to a container position of the at least two container positions of the container rack at the loading position.
2. The sample management apparatus of example 1, wherein
   the dispatch mechanism is arranged below the storage mechanism in the height direction of the sample management apparatus; and
   the transfer mechanism comprises a first clamping jaw and a first drive assembly, wherein the first clamping jaw is configured to clamp and release the sample container, and the first drive assembly is configured to at least drive the first clamping jaw to move the sample container from the storage mechanism to directly above the loading position, so as to enable the first clamping jaw to place the sample container into the container rack at the loading position.
3. The sample management apparatus of example 1, wherein
   the dispatch mechanism is arranged above the storage mechanism in the height direction of the sample management apparatus, and the sample management apparatus is provided with a transit position between the storage mechanism and the dispatch mechanism; and
   the transfer mechanism comprises a second clamping jaw, a second drive assembly, a third clamping jaw and a third drive assembly, wherein both the second clamping jaw and the third clamping jaw are configured to clamp and release the sample container, the second drive assembly is configured to at least drive the second clamping jaw to move the sample container from the storage mechanism to the transit position, and the third drive assembly is configured to at least drive the third clamping jaw to move the sample container from the transit position to directly above the loading position, so as to enable the third clamping jaw to place the sample container into the container rack at the loading position.
4. The sample management apparatus of example 1, wherein the dispatch mechanism further comprises a recycle support platform, a second drive component and a third drive component, wherein
   the recycle support platform is provided with a recycle position arranged directly opposite to the loading position in a first horizontal direction;
   the second drive component is configured to drive a container rack, loaded with a sample container containing a to-be-recycled sample, on the recycle support platform to move to the recycle position in a second horizontal direction;
   the transfer mechanism is further configured to transfer the sample container from the container rack at the recycle position to the storage mechanism or to a sample container recycle component independent of the storage mechanism; and
   the third drive component is configured to drive an unloaded container rack at the recycle position to move to the loading position in the first horizontal direction,
   wherein the first horizontal direction is perpendicular to the second horizontal direction.
5. The sample management apparatus of example 4, wherein the dispatch mechanism further comprises a buffer support platform, a fourth drive component and a fifth drive component, wherein
   the recycle support platform is arranged between the loading support platform and the buffer support platform in the first horizontal direction, and the buffer support platform is provided with a transfer position;
   the fourth drive component is configured to drive an unloaded container rack on the buffer support platform to move to the transfer position in the second horizontal direction;
   the fifth drive component is configured to drive the unloaded container rack at the transfer position to move to the recycle support platform in the first horizontal direction; and
   the second drive component is further configured to drive the unloaded container rack, which is moved from the transfer position to the recycle support platform, to move to the recycle position in the second horizontal direction.
6. The sample management apparatus of example 5, wherein
   a size of the loading support platform is greater than a size of the buffer support platform in the second horizontal direction, and a size of the recycle support platform is greater than the size of the buffer support platform in the second horizontal direction; and/or a size of the loading support platform is equal to a size of the recycle support platform in the second horizontal direction.
7. The sample management apparatus of example 5, wherein
   the sample management apparatus is provided with a clearance space located directly above the loading position and the recycle position, wherein the clearance space allows the transfer mechanism to drive the sample container to descend from directly above the loading position, and allows the transfer mechanism to drive the sample container to ascend from the recycle position; or
   the sample management apparatus is provided with a loading opening located directly above the loading position and with a recycle opening located directly above the recycle position, wherein the loading opening allows the transfer mechanism to drive the sample container to descend from directly above the loading position, the recycle opening allows the transfer mechanism to drive the sample container to ascend from the recycle position, and the loading opening and the recycle opening are arranged separately from each other.
8. The sample management apparatus of any one of examples 5 to 7, further comprising a transport track, wherein the loading support platform, the recycle support platform and the buffer support platform are arranged on a same side of the transport track in the second horizontal direction; and
   the transport track is configured to:
   transport the container rack, loaded with the sample container containing a to-be-tested sample, on the loading support platform to a transport apparatus in the first horizontal direction, such that the transport apparatus transports the container rack to at least one sample processing apparatus;
   transport the unloaded container rack on the loading support platform to the buffer support platform; and
   transport the container rack loaded with the sample container containing a to-be-recycled sample to the recycle support platform.
9. The sample management apparatus of example 8, wherein
   the loading position is arranged at an end, away from the transport track, of the loading support platform in the second horizontal direction, the recycle position is arranged at an end, away from the transport track, of the recycle support platform in the second horizontal direction, and the transfer position is arranged at an end, away from the transport track, of the buffer support platform in the second horizontal direction;
   a distance from the loading position to the transport track in the second horizontal direction is greater than a distance from the transfer position to the transport track in the second horizontal direction; and
   a distance from the recycle position to the transport track in the second horizontal direction is greater than the distance from the transfer position to the transport track in the second horizontal direction.
10. The sample management apparatus of example 8, wherein the transport track is a single track capable of transporting the container rack forward and backward in the first horizontal direction.
11. The sample management apparatus of example 1, wherein the loading support platform comprises at least two loading positions, and each of the at least two loading positions supports a respective container rack for receiving the sample containers transferred by the transfer mechanism.
12. The sample management apparatus of example 11, wherein the at least two loading positions are arranged side by side in a second horizontal direction.
13. The sample management apparatus of any one of examples 1 to 7, 11 and 12, further comprising: a first information acquisition component and a controller, wherein the first information acquisition component is configured to identify the sample container after the transfer mechanism clamps the sample container from the storage mechanism and before the transfer mechanism transfers the sample container to the container rack at the loading position; and
   the controller is configured to:
   determine a classification attribute of a target sample container based on feedback information from the first information acquisition component;
   determine whether the container rack at the loading position is loaded with a sample container having a classification attribute that is same as the classification attribute of the target sample container; or determine whether the container rack at the loading position is assigned with a classification attribute that is same as the classification attribute of the target sample container; and
   control the transfer mechanism to place the target sample container into the container rack, that is loaded with the sample container having the same classification attribute as the target sample container, at the loading position, in response to determining that the container rack at the loading position is loaded with the sample container having the same classification attribute as the target sample container; or control the transfer mechanism to place the target sample container into the container rack, that is assigned with the same classification attribute as the target sample container, at the loading position, in response to determining that the container rack at the loading position is assigned with the same classification attribute as the target sample container.
14. The sample management apparatus of example 13, wherein the controller is further configured to:
   acquire at least an appearance characteristic of the target sample container based on feedback information from the first information acquisition component, and determine the classification attribute of the target sample container based on the appearance characteristic of the target sample container; and/or
   acquire at least a to-be-processed item of a sample in the target sample container based on feedback information from the first information acquisition component, and determine the classification attribute of the target sample container based on the to-be-processed item of the sample in the target sample container.
15. The sample management apparatus of example 13, wherein the first information acquisition component is arranged on the transfer mechanism, the storage mechanism, or the dispatch mechanism.
16. The sample management apparatus of any one of examples 1 to 7, further comprising:
   a second information acquisition component, arranged on the transfer mechanism for identifying the sample container on the storage mechanism; and
   a controller, configured to determine a storage status of the sample container on the storage mechanism based on feedback information from the second information acquisition component.
17. The sample management apparatus of any one of examples 1 to 7, wherein the storage mechanism comprises a container supporter; the sample management apparatus further comprises a housing, the container supporter is horizontally movable relative to the housing, and the container supporter is provided with at least one support position for placing a bracket capable of supporting a plurality of sample containers.
18. The sample management apparatus of example 17, further comprising two or more container supporters, at least one of the two or more container supporters is configured to support a bracket for a sample container containing a to-be-tested sample, and at least another of the two or more container supporters is configured to support a bracket for a sample container containing a to-be-recycled sample.
19. The sample management apparatus of example 17, further comprising two or more container supporters, wherein at least one of the two or more container supporters is configured to support a bracket for a sample container containing an abnormal sample.
20. A sample processing system, comprising: a transport apparatus, at least one sample processing apparatus, and the sample management apparatus of any one of examples 1 to 19; wherein

the transport apparatus is configured to transport a container rack loaded with a sample container from the sample management apparatus to the sample processing apparatus; and the sample processing apparatus is configured to aspirate a sample from the sample container in the container rack and process at least a portion of the aspirated sample.

## Claims

1. A sample management apparatus, **characterized in that** the sample management apparatus comprises:
a storage mechanism, configured to at least store a sample container containing a sample;
a dispatch mechanism, arranged below or above the storage mechanism in a height direction of the sample management apparatus and comprising a loading support platform and a first drive component, wherein the loading support platform is provided with a loading position for supporting a container rack with at least two container positions for receiving the sample containers transferred by a transfer mechanism; and the first drive component is configured to drive the container rack at the loading position to move away from the loading position; and
the transfer mechanism, configured to at least transfer a sample container containing a sample from the storage mechanism to a container position of the at least two container positions of the container rack at the loading position.

2. The sample management apparatus of claim 1, wherein
the dispatch mechanism is arranged below the storage mechanism in the height direction of the sample management apparatus; and
the transfer mechanism comprises a first clamping jaw and a first drive assembly, wherein the first clamping jaw is configured to clamp and release the sample container, and the first drive assembly is configured to at least drive the first clamping jaw to move the sample container from the storage mechanism to directly above the loading position, so as to enable the first clamping jaw to place the sample container into the container rack at the loading position.

3. The sample management apparatus of claim 1, wherein
the dispatch mechanism is arranged above the storage mechanism in the height direction of the sample management apparatus, and the sample management apparatus is provided with a transit position between the storage mechanism and the dispatch mechanism; and
the transfer mechanism comprises a second clamping jaw, a second drive assembly, a third clamping jaw and a third drive assembly, wherein both the second clamping jaw and the third clamping jaw are configured to clamp and release the sample container, the second drive assembly is configured to at least drive the second clamping jaw to move the sample container from the storage mechanism to the transit position, and the third drive assembly is configured to at least drive the third clamping jaw to move the sample container from the transit position to directly above the loading position, so as to enable the third clamping jaw to place the sample container into the container rack at the loading position.

4. The sample management apparatus of claim 1, wherein the dispatch mechanism further comprises a recycle support platform, a second drive component and a third drive component, wherein
the recycle support platform is provided with a recycle position arranged directly opposite to the loading position in a first horizontal direction;
the second drive component is configured to drive a container rack, loaded with a sample container containing a to-be-recycled sample, on the recycle support platform to move to the recycle position in a second horizontal direction;
the transfer mechanism is further configured to transfer the sample container from the container rack at the recycle position to the storage mechanism or to a sample container recycle component independent of the storage mechanism; and
the third drive component is configured to drive an unloaded container rack at the recycle position to move to the loading position in the first horizontal direction,
wherein the first horizontal direction is perpendicular to the second horizontal direction.

5. The sample management apparatus of claim 4, wherein the dispatch mechanism further comprises a buffer support platform, a fourth drive component and a fifth drive component, wherein
the recycle support platform is arranged between the loading support platform and the buffer support platform in the first horizontal direction, and the buffer support platform is provided with a transfer position;
the fourth drive component is configured to drive an unloaded container rack on the buffer support platform to move to the transfer position in the second horizontal direction;
the fifth drive component is configured to drive the unloaded container rack at the transfer position to move to the recycle support platform in the first horizontal direction; and
the second drive component is further configured to drive the unloaded container rack, which is moved from the transfer position to the recycle support platform, to move to the recycle position in the second horizontal direction.

6. The sample management apparatus of claim 5, wherein
a size of the loading support platform is greater than a size of the buffer support platform in the second horizontal direction, and a size of the recycle support platform is greater than the size of the buffer support platform in the second horizontal direction; and/or
a size of the loading support platform is equal to a size of the recycle support platform in the second horizontal direction.

7. The sample management apparatus of claim 5, wherein
the sample management apparatus is provided with a clearance space located directly above the loading position and the recycle position, wherein the clearance space allows the transfer mechanism to drive the sample container to descend from directly above the loading position, and allows the transfer mechanism to drive the sample container to ascend from the recycle position; or
the sample management apparatus is provided with a loading opening located directly above the loading position and with a recycle opening located directly above the recycle position, wherein the loading opening allows the transfer mechanism to drive the sample container to descend from directly above the loading position, the recycle opening allows the transfer mechanism to drive the sample container to ascend from the recycle position, and the loading opening and the recycle opening are arranged separately from each other.

8. The sample management apparatus of any one of claims 5 to 7, further comprising a transport track, wherein the loading support platform, the recycle support platform and the buffer support platform are arranged on a same side of the transport track in the second horizontal direction; and
the transport track is configured to:
transport the container rack, loaded with the sample container containing a to-be-tested sample, on the loading support platform to a transport apparatus in the first horizontal direction, such that the transport apparatus transports the container rack to at least one sample processing apparatus;
transport the unloaded container rack on the loading support platform to the buffer support platform; and
transport the container rack loaded with the sample container containing a to-be-recycled sample to the recycle support platform.

9. The sample management apparatus of claim 8, wherein
the loading position is arranged at an end, away from the transport track, of the loading support platform in the second horizontal direction, the recycle position is arranged at an end, away from the transport track, of the recycle support platform in the second horizontal direction, and the transfer position is arranged at an end, away from the transport track, of the buffer support platform in the second horizontal direction;
a distance from the loading position to the transport track in the second horizontal direction is greater than a distance from the transfer position to the transport track in the second horizontal direction; and
a distance from the recycle position to the transport track in the second horizontal direction is greater than the distance from the transfer position to the transport track in the second horizontal direction.

10. The sample management apparatus of claim 1, wherein the loading support platform comprises at least two loading positions, and each of the at least two loading positions supports a respective container rack for receiving the sample containers transferred by the transfer mechanism.

11. The sample management apparatus of any one of claims 1 to 7 and 10, further comprising: a first information acquisition component and a controller, wherein
the first information acquisition component is configured to identify the sample container after the transfer mechanism clamps the sample container from the storage mechanism and before the transfer mechanism transfers the sample container to the container rack at the loading position; and
the controller is configured to:
determine a classification attribute of a target sample container based on feedback information from the first information acquisition component;
determine whether the container rack at the loading position is loaded with a sample container having a classification attribute that is same as the classification attribute of the target sample container; or determine whether the container rack at the loading position is assigned with a classification attribute that is same as the classification attribute of the target sample container; and
control the transfer mechanism to place the target sample container into the container rack, that is loaded with the sample container having the same classification attribute as the target sample container, at the loading position, in response to determining that the container rack at the loading position is loaded with the sample container having the same classification attribute as the target sample container; or control the transfer mechanism to place the target sample container into the container rack, that is assigned with the same classification attribute as the target sample container, at the loading position, in response to determining that the container rack at the loading position is assigned with the same classification attribute as the target sample container.

12. The sample management apparatus of claim 11, wherein the controller is further configured to:
acquire at least an appearance characteristic of the target sample container based on feedback information from the first information acquisition component, and determine the classification attribute of the target sample container based on the appearance characteristic of the target sample container; and/or
acquire at least a to-be-processed item of a sample in the target sample container based on feedback information from the first information acquisition component, and determine the classification attribute of the target sample container based on the to-be-processed item of the sample in the target sample container.

13. The sample management apparatus of claim 11, wherein the first information acquisition component is arranged on the transfer mechanism, the storage mechanism, or the dispatch mechanism.

14. The sample management apparatus of any one of claims 1 to 7, further comprising:
a second information acquisition component, arranged on the transfer mechanism for identifying the sample container on the storage mechanism; and
a controller, configured to determine a storage status of the sample container on the storage mechanism based on feedback information from the second information acquisition component.

15. A sample processing system, comprising: a transport apparatus, at least one sample processing apparatus, and the sample management apparatus of any one of claims 1 to 14; wherein
the transport apparatus is configured to transport a container rack loaded with a sample container from the sample management apparatus to the sample processing apparatus; and
the sample processing apparatus is configured to aspirate a sample from the sample container in the container rack and process at least a portion of the aspirated sample.
